(19) Europäisches Patentamt / European Patent Office / Office européen des brevets

(11) **EP 4 769 992 A1**

(12) **EUROPEAN PATENT APPLICATION**
published in accordance with Art. 153(4) EPC

(43) Date of publication:
**01.07.2026   Bulletin 2026/27**

(21) Application number: **23953769.9**

(22) Date of filing: **28.09.2023**

(51) International Patent Classification (IPC):
**H04L 5/00** (2006.01)

(52) Cooperative Patent Classification (CPC):
**H04L 5/00**

(86) International application number:
**PCT/CN2023/122912**

(87) International publication number:
**WO 2025/065625 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
• **WANG, Yu
Shenzhen, Guangdong 518129 (CN)**

• **LUO, Hejia
Shenzhen, Guangdong 518129 (CN)**
• **YU, Chuchu
Shenzhen, Guangdong 518129 (CN)**
• **YU, Tianhang
Shenzhen, Guangdong 518129 (CN)**
• **KONG, Chuili
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54)   **COMMUNICATION METHOD AND APPARATUS**

(57)   A communication method and apparatus are provided. The method may be applied to non-terrestrial network NTN communication, to reduce signaling overheads. The method includes: A first network device obtains first configuration information and second configuration information, and sends the first configuration information and the second configuration information to a first terminal device. The first configuration information indicates information about a first region in which a first network device takes effect. The second configuration information indicates information about a second region in which the first network device takes effect. The first region and the second region are fixed relative to the earth. A range of the first region is greater than or equal to a range of the second region. The first terminal device determines an identifier of a third region based on location information of the first terminal device and the first configuration information, and determines an identifier of a fourth region based on the location information of the first terminal device and the second configuration information. The third region is the first region in which the first terminal device is located, and the fourth region is the second region in which the first terminal device is located. The first terminal device performs communication based on the identifier of the third region or the identifier of the fourth region.

EP 4 769 992 A1

First network
device

First terminal
device

S1201: Obtain first configuration information and/or second
configuration information, where the first configuration
information indicates information about a first region in which the
first network device takes effect, the second configuration
information indicates information about a second region in which
the first network device takes effect, the first region and the
second region are fixed relative to the earth, and a range of the
first region is greater than or equal to a range of the second region

S1202: First configuration
information and/or second
configuration information

S1203: Determine an identifier of a third region
based on location information of the first terminal
device and the first configuration information,
where the third region is the first region in which
the first terminal device is located

S1204: Determine an identifier of a fourth region
based on the location information of the first
terminal device and the second configuration
information, where the fourth region is the second
region in which the first terminal device is located

S1205: Perform communication based on the
identifier of the third region or the identifier of
the fourth region

FIG. 12

## Description

## TECHNICAL FIELD

Embodiments of this application relate to the communication field, and in particular, to a communication method and apparatus.

## BACKGROUND

A non-terrestrial network (non-terrestrial network, NTN) has significant advantages such as global coverage, long-distance transmission, flexible networking, convenient deployment, and being not restricted by geographical conditions, and has been widely applied to many fields such as maritime communication, positioning navigation, disaster relief, scientific experiments, video broadcasting, and earth observation. The NTN network and a terrestrial network may be integrated and complement each other to jointly form a globally seamless space-air-ground-sea integrated communication network, to satisfy a plurality of service requirements of users in various respects.

As an important part of the NTN, a next generation satellite network is generally in a trend of being ultra-dense and heterogeneous. First, a quantity of satellites has increased from 66 in the Iridium satellite constellation to 720 in the OneWeb satellite constellation, and finally to 12000+ in the Starlink (Starlink) ultra-dense low-earth orbit (low-earth orbit, LEO) satellite constellation. Second, a satellite network is heterogeneous. A conventional single-layer communication network has evolved to a multi-layer communication network. A communication satellite network tends to have complex and diversified functions, and is gradually compatible with and supports functions such as navigation augmentation, earth observation, and on-orbit processing of multi-dimensional information.

In the NTN, a coverage region of a satellite may change with time. Therefore, the satellite needs to frequently indicate a coverage region of the satellite to a terminal device. Currently, the coverage region of the satellite is usually described explicitly, for example, described in a manner of longitude and latitude, a beam direction, and a steering angle, causing high signaling overheads.

## SUMMARY

Embodiments of this application provide a communication method and apparatus, to reduce signaling overheads.

According to a first aspect, a communication method is provided. The method may be performed by a first terminal device; may be performed by a component of a first terminal device, for example, a processor, a chip, or a chip system of the first terminal device; or may be implemented by a logical module or software that can implement all or a part of functions of the first terminal device. The method includes: receiving first configuration information and second configuration information from a first network device, where the first configuration information indicates information about a first region in which the first network device takes effect, the second configuration information indicates information about a second region in which the first network device takes effect, the first region and the second region are fixed relative to the earth, and a range of the first region is greater than or equal to a range of the second region; determining an identifier of a third region based on location information of a first terminal device and the first configuration information, where the third region is the first region in which the first terminal device is located; determining an identifier of a fourth region based on the location information of the first terminal device and the second configuration information, where the fourth region is the second region in which the first terminal device is located; and performing communication based on the identifier of the third region or the identifier of the fourth region.

Based on this solution, the ground may be discrete into some regions that are fixed relative to the earth. Because the region is fixed relative to the earth, that is, a location of the region is fixed relative to the earth, a network device may indicate a coverage region or a service region of the network device to a terminal device by using a region identifier, or may indicate information about the region (for example, indicate a total quantity of regions and/or a region radius) to a terminal device, so that the terminal device can learn of region distribution based on region information. Therefore, a region in which the terminal device is located is determined based on location information and region distribution of the terminal device, and communication is performed based on the region in which the terminal device is located. The network device explicitly indicates a coverage region of the network device to the terminal device. In comparison, signaling overheads can be reduced.

In addition, regions in this application may be classified into a first region and a second region, and a range of the first region is greater than or equal to a range of the second region. In other words, this application may provide region division at a plurality of levels, so that the terminal device determines, based on different connection statuses, regions in which the terminal device is located at different levels, to perform communication in different manners, thereby improving communication flexibility.

In a possible design, the information about the first region includes a total quantity $N_{spot\_b}$ of first regions and/or a radius $R_{spot\_b}$ of the first region; and/or the information about the second region includes a total quantity $N_{spot\_b}$ of second regions and/or a radius $R_{spot\_s}$ of the second region.

Based on this possible design, the terminal device may learn of a total quantity of identifiers of first regions and/or a total quantity of identifiers of second regions, to learn of a geographical location of each first region and/or each second region based on a region identifier, thereby further learning of region distribution.

In a possible design, the information about the first region further includes access information corresponding to the first region, and the access information is used by a terminal device in the first region to access the first network device.

In a possible design, the access information includes at least one of the following: a random access occasion RO, a random access preamble, a timing advance TA, or a first time period, and the first time period is a time period in which a beam of the first network device serves the first region.

In a possible design, performing communication based on the identifier of the third region includes: determining, based on the identifier of the third region, access information corresponding to the third region; and accessing the first network device based on the access information corresponding to the third region.

Based on the foregoing three possible designs, the first network device may indicate the access information corresponding to the first region, so that the terminal device in the first region can access the first network device based on the access information. Therefore, the first network device may indicate different random access resources for different first regions, so that terminal devices in different first regions can access the first network device on different random access resources, thereby reducing resource collisions during random access performed by the terminal devices and improving an access success rate.

In a possible design, performing communication based on the identifier of the fourth region includes: sending first information to the first network device, where the first information indicates the identifier of the fourth region.

Based on this possible design, the first network device can learn of the second region in which the terminal device is located, so that the first network device can perform processing based on the identifier of the fourth region, for example, perform location identification and beam management of the terminal device.

In a possible design, the information about the second region further includes a communication resource corresponding to the second region, and the communication resource is used for information transmission between a terminal device in the second region and the first network device.

In a possible design, the communication resource includes at least one of the following: a frequency domain resource, a polarization manner, or a second time period, and the second time period is a time period in which a beam of the first network device serves the second region.

In a possible design, performing communication based on the identifier of the fourth region includes: determining, based on the identifier of the fourth region, a communication resource corresponding to the fourth region; and sending first information to the first network device by using the communication resource corresponding to the fourth region, where the first information indicates the identifier of the fourth region.

Based on the foregoing three possible designs, the first network device may indicate the communication resource corresponding to the second region, so that a terminal device in the second region can communicate with the first network device by using the communication resource. Therefore, the first network device may indicate different communication resources for different second regions, so that terminal devices in different second regions can communicate with the first network device on different resources, thereby reducing resource collisions and improving communication performance.

In a possible design, the method further includes: receiving second information from the first network device, where the second information indicates at least one of the following: access information of a fifth region, an identifier of the fifth region, a total quantity of sixth regions, a radius of the sixth region, or measurement timing configuration information; and the fifth region is the sixth region in which the first terminal device is located. The sixth region is fixed relative to the earth. A geographical location of the sixth region is determined based on an identifier of the sixth region. The total quantity of sixth regions is a total quantity of regions in which the second network device takes effect. The access information of the fifth region is used by the first terminal device to access the second network device. The measurement timing configuration information is used to configure a time for measuring a signal of the second network device by the first terminal device.

In a possible design, the method further includes: accessing the second network device based on the access information corresponding to the fifth region.

Based on the foregoing two possible designs, the first network device can determine the sixth region that is of the second network device and in which the first terminal device is located, to indicate, to the first terminal device, access information corresponding to the sixth region and the like, so that the first terminal device can access the second network device based on the access information. However, in a conventional NSA networking procedure, after accessing an eNodeB, a terminal device needs to perform NR measurement to discover an NR neighboring cell with highest signal quality, and send a measurement result to the eNodeB, so that the eNodeB adds a gNB to which the NR neighboring cell with the highest signal quality belongs. After the eNodeB adds the gNB, the terminal device performs random access to access an NR cell.

Therefore, compared with a conventional NSA networking procedure, the foregoing solution does not require the first terminal device to perform related measurement. After learning of the sixth region in which the first terminal device is located, the first network device may directly send the access information of the sixth region, so that the first terminal device accesses the second network device based on the access information. In other words, the first terminal device can access the second network device more quickly, thereby reducing access duration and improving access efficiency.

In a possible design, the method further includes: receiving third information from the first network device, where the third information indicates a first-region set and/or a second-region set, the first-region set includes the first region in a coverage region of the first network device, and the second-region set includes the second region in the coverage region of the first network device.

In a possible design, the method further includes: receiving fourth information from the first network device, where the fourth information indicates a first region that is in the first-region set and that is served by a beam of the first network device, and/or indicates a second region that is in the second-region set and that is served by a beam of the first network.

In a possible design, the method further includes: receiving fifth information from the first network device, where the fifth information indicates N third time periods and N first-region subsets, and/or indicates M fourth time periods and M second-region subsets. An $n^{th}$ first-region subset includes the first region that is in the first-region set and that is served by the beam of the first network device in an $n^{th}$ third time period. Herein, N is a positive integer, and n=1, 2, ..., N. An $m^{th}$ second-region subset includes the second region that is in the second-region set and that is served by the beam of the first network device in an $m^{th}$ fourth time period. Herein, M is a positive integer, and m=1, 2, ..., M.

In a possible design, performing communication based on the identifier of the third region or the identifier of the fourth region includes: performing communication based on the identifier of the third region in a time period in which the third region is served by a beam of the first network device; or performing communication based on the identifier of the fourth region in a time period in which the fourth region is served by a beam of the first network device.

Based on the foregoing several possible designs, the first network device can indicate, to the first terminal device, a time period in which the beam of the first network device serves the first region and/or the second region, so that the first terminal device can perform communication within a beam service time, thereby improving communication performance. In addition, the first region and/or the second region served by the beam of the first network device may be indicated by using an identifier or a bitmap of a region. Signaling overheads can be reduced in this manner compared with explicitly describing a geographical region served by a beam of the first network device, for example, describing by using information such as latitude and longitude.

In a possible design, the method further includes: receiving sixth information from the first network device, where the sixth information indicates a first quasi co-location QCL relationship, and a receive beam of the first region and a receive beam of the second region in the first region satisfy the first QCL relationship.

Based on this possible design, the first terminal device may determine, based on a beam of the first region and the first QCL relationship, a beam of the second region in the first region; or determine, based on a beam of the second region and the first QCL relationship, a beam of the first region to which the second region belongs. This can avoid a frequent beam pairing process, reduce a beam matching delay, and improve beam management efficiency. In addition, because a beam matching delay is reduced, a communication delay can be reduced, and communication efficiency can be improved.

In a possible design, the sixth information further indicates a fifth time period or a timer. The receive beam of the first region and the receive beam of the second region in the first region satisfy the first QCL relationship in the fifth time period; or the receive beam of the first region and the receive beam of the second region in the first region satisfy the first QCL relationship before the timer expires.

According to a second aspect, a communication method is provided. The method may be performed by a first network device; may be performed by a component of a first network device, for example, a processor, a chip, or a chip system of the first network device; or may be implemented by a logical module or software that can implement all or a part of functions of the first network device. The method includes: obtaining first configuration information and second configuration information, where the first configuration information indicates information about a first region in which the first network device takes effect, the second configuration information indicates information about a second region in which the first network device takes effect, the first region and the second region are fixed relative to the earth, and a range of the first region is greater than or equal to a range of the second region; and sending the first configuration information and the second configuration information to a terminal device. For technical effect brought by the second aspect, refer to the technical effect brought by the first aspect. Details are not described herein again.

In a possible design, the information about the first region includes a total quantity $N_{spot\_b}$ of first regions and/or a radius $N_{spot\_b}$ of the first region; and/or the information about the second region includes a total quantity $N_{spot\_b}$ of second regions and/or a radius $R_{spot\_s}$ of the second region.

In a possible design, the information about the first region further includes access information corresponding to the first region, and the access information is used by a terminal device in the first region to access the first network device.

In a possible design, the access information includes at least one of the following: a random access occasion RO, a random access preamble, a timing advance TA, or a first time period, and the first time period is a time period in which a beam of the first network device serves the first region.

In a possible design, the information about the second region further includes a communication resource corresponding to the second region, and the communication resource is used for information transmission between a terminal device in the second region and the first network device.

In a possible design, the communication resource includes at least one of the following: a frequency domain resource, a polarization manner, or a second time period, and the second time period is a time period in which a beam of the first network device serves the second region.

In a possible design, the method further includes: sending second information to the terminal device, where the second information indicates at least one of the following: access information of a fifth region, an identifier of the fifth region, a total quantity of sixth regions, a radius of the sixth region, or measurement timing configuration information; and the fifth region is the sixth region in which the first terminal device is located. The sixth region is fixed relative to the earth. A geographical location of the sixth region is determined based on an identifier of the sixth region. The total quantity of sixth regions is a total quantity of regions in which the second network device takes effect. The access information of the fifth region is used by the first terminal device to access the second network device. The measurement timing configuration information is used to configure a time for measuring a signal of the second network device by the first terminal device.

In a possible design, the method further includes: sending third information to the terminal device, where the third information indicates a first-region set and/or a second-region set, the first-region set includes the first region in a coverage region of the first network device, and the second-region set includes the second region in the coverage region of the first network device.

In a possible design, the method further includes: sending fourth information to the terminal device, where the fourth information indicates a first region that is in the first-region set and that is served by a beam of the first network device, and/or indicates a second region that is in the second-region set and that is served by a beam of the first network.

In a possible design, the method further includes: sending fifth information to the terminal device, where the fifth information indicates N third time periods and N first-region subsets, and/or indicates M fourth time periods and M second-region subsets. An $n^{th}$ first-region subset includes the first region that is in the first-region set and that is served by the beam of the first network device in an $n^{th}$ third time period. Herein, N is a positive integer, and n=1, 2, ..., N. An $m^{th}$ second-region subset includes the second region that is in the second-region set and that is served by the beam of the first network device in an $m^{th}$ fourth time period. Herein, M is a positive integer, and m=1, 2, ..., M.

In a possible design, the method further includes: sending sixth information to the terminal device, where the sixth information indicates a first quasi co-location QCL relationship, and a receive beam of the first region and a receive beam of the second region in the first region satisfy the first QCL relationship.

In a possible design, the sixth information further indicates a fifth time period or a timer. The receive beam of the first region and the receive beam of the second region in the first region satisfy the first QCL relationship in the fifth time period; or the receive beam of the first region and the receive beam of the second region in the first region satisfy the first QCL relationship before the timer expires.

For technical effect brought by any possible design of the second aspect, refer to technical effect brought by a corresponding design of the first aspect. Details are not described herein again.

With reference to the first aspect or the second aspect, in a possible design, a geographical location of the first region is determined based on an identifier of the first region, and a geographical location of the second region is determined based on an identifier of the second region.

With reference to the first aspect or the second aspect, in a possible design, the geographical location of the first region is further determined based on at least one of the following: a radius of the first region, an earth radius, and a total quantity of first regions; and/or the geographical location of the second region is further determined based on at least one of the following: a radius of the second region, an earth radius, and a total quantity of second regions.

Based on this possible design, a total quantity of regions, a radius of a region, and the earth radius may be the same for all regions. In other words, the total quantity of regions, the radius of the region, and the earth radius may be considered as constants. In this case, it may be considered that a variable that affects a geographical location of a region is an identifier of the region.

With reference to the first aspect or the second aspect, in a possible design, the first region includes a reference location, and three-dimensional coordinates of the reference location and the identifier of the first region satisfy the following relationship:

$$RL(i) = R_e \times (\cos \varphi_i \sin \theta_i, \sin \varphi_i \sin \theta_i, \cos \theta_i),$$

$$\varphi_i = 2\pi \left[ \frac{2i}{1+\sqrt{5}} \right],$$

and

$$\theta_i = \cos^{-1}\left(1 - \frac{2i+1}{N_{spot\_b}}\right), i \in \{0, \cdots, N_{spot\_b} - 1\}.$$

*i* represents the identifier of the first region, *RL(i)* represents the three-dimensional coordinates of the reference location, $R_e$ represents the earth radius, *[x]* represents a fractional part of *x*, and $N_{spot\_b}$ represents the total quantity of first regions.

With reference to the first aspect or the second aspect, in a possible design, a projection $RL(x_i, y_i)$ of the reference location on a unit square and the identifier of the first region satisfy the following relationship:

$$RL(x_i) = (1 - cos\theta_i)/2,$$

and

$$RL(y_i) = \varphi_i (2\pi)^{-1}.$$

The unit square is a square whose vertexes are located at (0, 0), (1, 0), (0, 1), and (1, 1) on a Cartesian plane, $RL(x_i)$ represents a projection metric of the reference location on an x-axis of the unit square, and $RL(y_i)$ represents a projection metric of the reference location on a y-axis of the unit square.

With reference to the first aspect or the second aspect, in a possible design, Cartesian coordinates $RL(x_i, y_i)$ of the reference location and the identifier of the first region satisfy the following relationship:

$$RL(x_i) = i/N_{spot\_b},$$

and

$$RL(y_i) = \left[\frac{i}{\emptyset}\right], \emptyset = \frac{1+\sqrt{5}}{2}.$$

$RL(x_i)$ represents a projection metric of the reference location in an x-axis direction of the Cartesian coordinate system, and $RL(y_i)$ represents a projection metric of the reference location in a y-axis direction of the Cartesian coordinate system.

With reference to the first aspect or the second aspect, in a possible design, the first region includes a reference location, and three-dimensional coordinates of the reference location and the identifier of the first region satisfy the following relationship:

$$RL(i) = R_e \times \left(\sqrt{1 - z_i^2} \cos 2\pi i\, \emptyset, \sqrt{1 - z_i^2} \sin 2\pi i\, \emptyset, z_i\right),$$

$$z_i = \frac{2i-1}{N_{spot\_b}} - 1, i \in \{1, \cdots, N_{spot\_b}\},$$

and

$$\emptyset = \frac{1+\sqrt{5}}{2}.$$

*i* represents the identifier of the first region, *RL(i)* represents the three-dimensional coordinates of the reference location, $R_e$ represents the earth radius, and $N_{spot}$ represents the total quantity of first regions.

With reference to the first aspect or the second aspect, in a possible design, the first region includes a reference location, and longitude and latitude coordinates of the reference location and the identifier of the first region satisfy the following relationship:

$$RL(i) = (\text{lon}(i), \text{lat}(i)),$$

$$\text{lon}(i) = \sin^{-1}\left(\frac{2i}{2N+1}\right), N = \frac{N_{spot\_b}-1}{2},$$

and

$$\text{lat}(i) = 2\pi i \emptyset^{-1}, i \in \{1, \cdots, N_{spot\_b}\}, \emptyset = \frac{1+\sqrt{5}}{2}.$$

lon(i) represents longitude of the reference location, lat(i) represents latitude of the reference location, and $N_{spot\_b}$ represents the total quantity of first regions.

With reference to the first aspect or the second aspect, in a possible design, the radius of the first region and the total quantity of first regions satisfy the following relationship:

$$N_{spot\_b} = \frac{8\pi R_e^2}{3\sqrt{3}R_{spot\_b}^2}.$$

$R_e$ represents the earth radius, $N_{spot\_b}$ represents the total quantity of first regions, and $R_{spot\_b}$ represents the radius of the first region.

Based on the foregoing several possible designs, in one aspect, coordinates of a reference location in a region can be quickly and accurately determined based on an identifier of the region, so that a contour, a geographical location, and the like of the region can be quickly and accurately determined. In another aspect, a radius of the region can be flexibly adjusted to adapt to different load capabilities, for example, to adapt to different beam radii. In still another aspect, because the geographical location of the region can be determined based on the identifier of the region, information exchange may be performed between a network device and a terminal device based on the identifier of the region. Signaling overheads can be significantly reduced in this design compared with directly exchanging information such as a beam reference point and a beam coverage region contour. Unlike a manner of performing division based on an H3 geographical grid, because a total quantity of regions is relatively small, a quantity of bits required for indicating a region identifier is also relatively small, thereby reducing signaling overheads.

According to a third aspect, a communication apparatus is provided, to implement various methods. The communication apparatus may be the first terminal device in the first aspect, or an apparatus included in the first terminal device, for example, a chip or a chip system; or the communication apparatus may be the first network device in the second aspect, or an apparatus included in the first network device, for example, a chip or a chip system. The communication apparatus includes a corresponding module, unit, or means (means) for implementing the methods. The module, the unit, or the means may be implemented by using hardware or software, or by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation of the foregoing aspects. The transceiver module may include a receiving module and a sending module that are respectively configured to implement a receiving function and a sending function in any one of the foregoing aspects and any possible implementation of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions, and when the processor executes the instructions, the communication apparatus is enabled to perform the method according to any one of the aspects. The communication apparatus may be the first terminal device in the first aspect, or an apparatus included in the first terminal device, for example, a chip or a chip system; or the communication apparatus may be the first network device in the second aspect, or an apparatus included in the first network device, for example, a chip or a chip system.

According to a fifth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the first terminal device in the first aspect, or an apparatus included in the first terminal device, for example, a chip or a chip system; or the communication apparatus may be the first network device in the second aspect, or an apparatus included in the first network device, for example, a chip or a chip system.

According to a sixth aspect, a communication apparatus is provided, and includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first terminal device in the first aspect, or an apparatus included in the first terminal device, for example, a chip or a chip system; or the communication apparatus may be the first network device in the second aspect, or an apparatus included in the first network device, for example, a chip or a chip system.

According to a seventh aspect, a computer-readable storage medium is provided. The computer-readable storage medium stores a computer program or instructions. When the computer program or the instructions are run on a communication apparatus, the communication apparatus may be enabled to perform the method according to the first aspect and any possible design of the first aspect.

According to an eighth aspect, a computer program product including instructions is provided. When the computer program product runs on a communication apparatus, the communication apparatus may be enabled to perform the method according to any aspect and any possible design of the aspect.

According to a ninth aspect, a communication apparatus (for example, the communication apparatus may be a chip or a chip system) is provided. The communication apparatus includes a processor, configured to implement a function in any aspect and any possible design of the aspect.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus according to any one of the third aspect to the ninth aspect is a chip, a sending action/function of the communication apparatus may be understood as outputting information, and a receiving action/function of the communication apparatus may be understood as inputting information.

For technical effect brought by any design manner of the third aspect to the ninth aspect, refer to the technical effect brought by different design manners of the first aspect or the second aspect. Details are not described herein again.

**BRIEF DESCRIPTION OF DRAWINGS**

FIG. 1A and FIG. 1B are diagrams of beam coverage ranges in an earth-moving mode and an earth-fixed mode in an NTN according to this application;

FIG. 2A and FIG. 2B are diagrams of a projection of a beam on the ground according to this application;

FIG. 3 is a diagram of a region description manner based on an H3 geographical grid according to this application;

FIG. 4 is a diagram of a group switching scenario according to this application;

FIG. 5 is a schematic flowchart of beam management according to this application;

FIG. 6 is a diagram of an architecture of a satellite network in a transparent mode according to this application;

FIG. 7 is a diagram of an architecture of a satellite network in a regenerative mode according to this application;

FIG. 8 is a diagram of an architecture of a satellite network in another regenerative mode according to this application;

FIG. 9 is a diagram of an architecture of a satellite network in still another regenerative mode according to this application;

FIG. 10 is a diagram of a converged network architecture of an NTN and a terrestrial network according to this application;

FIG. 11A and FIG. 11B are a diagram of a mapping relationship between a beam of a network device and a region according to this application;

FIG. 12 is a schematic flowchart of a communication method according to this application;

FIG. 13 is a schematic flowchart of a communication method according to this application;

FIG. 14 is a schematic flowchart of a communication method according to this application;

FIG. 15 is a schematic flowchart of a communication method according to this application;

FIG. 16 is a schematic flowchart of a communication method according to this application;

FIG. 17 is a diagram of distribution of first regions according to this application;

FIG. 18 is a diagram of a relationship between a first region and a second region according to this application;

FIG. 19 is a diagram of a structure of a communication apparatus according to this application;

FIG. 20 is a diagram of a structure of another communication apparatus according to this application; and

FIG. 21 is a diagram of a structure of till another communication apparatus according to this application.

## DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding of the technical solutions in embodiments of this application, the following first briefly describes technologies related to this application.

1. Non-terrestrial network (non-terrestrial network, NTN)

Currently, 5th generation (5th generation, 5G) new radio (new radio, NR) has entered a commercial deployment phase from a standardization phase. The NR standard is mainly researched and designed based on characteristics of terrestrial communication. The terrestrial communication can provide a user terminal with high-rate, high-reliability, low-latency communication, and the like.

Compared with the terrestrial communication, NTN communication has prominent advantages such as global coverage, long-distance transmission, flexible networking, convenient deployment, and being not restricted by geographical conditions, and has been widely applied to a plurality of fields such as maritime communication, positioning and navigation, disaster relief, scientific experiments, video broadcasting, and earth observation. The NTN network and a terrestrial network may be integrated and complement each other to jointly form a globally seamless space-air-ground-sea integrated communication network, to satisfy a plurality of service requirements of users in various respects.

According to a height of a flight platform from the ground, the NTN may include a low-altitude platform (low altitude platform, LAP) subnetwork (LAP subnetwork), a high-altitude platform (high altitude platform, HAP) subnetwork (HAP subnetwork), and a satellite communication subnetwork (SATCOM subnetwork).

For example, in the LAP subnetwork, a base station or a base station function is deployed on a low-altitude flight platform (for example, an uncrewed aerial vehicle) 0.1 km to 1 km away from the ground to provide coverage for a terminal; in the HAP subnetwork, a base station or a base station function is deployed on a high-altitude flight platform (for example, an airplane) 8 km to 50 km away from the ground to provide coverage for a terminal; and in a SATCOM subnetwork, a base station or a base station function is deployed on a satellite more than 50 km away from the ground to provide coverage for a terminal.

Further, based on an orbital altitude of a satellite, satellite communication systems may be classified into a geostationary earth orbit (geostationary earth orbit, GEO) satellite communication system, a medium earth orbit (medium earth orbit, MEO) satellite communication system, and a low earth orbit (low-earth orbit, LEO) satellite communication system.

The GEO satellite communication system is also referred to as a synchronous orbit satellite system. An orbital altitude of a GEO satellite is 35786 km. A moving speed of the GEO satellite is the same as a rotation speed of the earth. In other words, the GEO satellite can remain stationary relative to the ground. The GEO satellite communication system can provide large cell coverage. Generally, a diameter of a cell is 500 km. However, the GEO satellite communication has obvious disadvantages: (1) An orbit of the GEO satellite is far away from the earth, and a propagation loss in free space is large. As a result, a communication link budget is tight. To increase a transmit/receive gain, the satellite needs to be equipped with an antenna with a large diameter. (2) A communication transmission delay is high, for example, a round-trip delay may reach about 500 milliseconds, which cannot satisfy a requirement of a real-time service. (3) GEO orbital resources are relatively tight, launch costs are high, and coverage cannot be provided for polar regions of the earth.

The orbital altitude of the MEO satellite ranges from 2000 km to 35786 km, and can implement global coverage with a relatively small quantity of satellites. However, the orbit height of the MEO satellite is higher than that of an LEO satellite, and a transmission delay of the MEO satellite communication is still longer than that of the LEO satellite communication. Therefore, in consideration of advantages and disadvantages of the MEO satellite communication, the MEO satellite is mainly used for positioning and navigation.

The orbital altitude of the LEO satellite ranges from 300 km to 2000 km. The orbital altitude of the LEO satellite is smaller than that of the MEO satellite. The LEO satellite has advantages such as a small transmission delay, a small transmission loss, and relatively low transmission costs.

A next-generation satellite communication system generally presents a trend of being ultra-dense and heterogeneous. First, a quantity of satellites has increased from 66 in the Iridium satellite constellation to 720 in the OneWeb satellite constellation, and finally to 12000+ in the Starlink (Starlink) ultra-dense LEO satellite constellation. Second, a satellite network is heterogeneous. A conventional single-layer communication network has evolved to a multi-layer communication network. A communication satellite network tends to have complex and diversified functions, and is gradually compatible with and supports functions such as navigation augmentation, earth observation, and on-orbit processing of multi-dimensional information.

2. Earth-moving (earth-moving) mode and earth-fixed (or quasi-earth fixed) mode

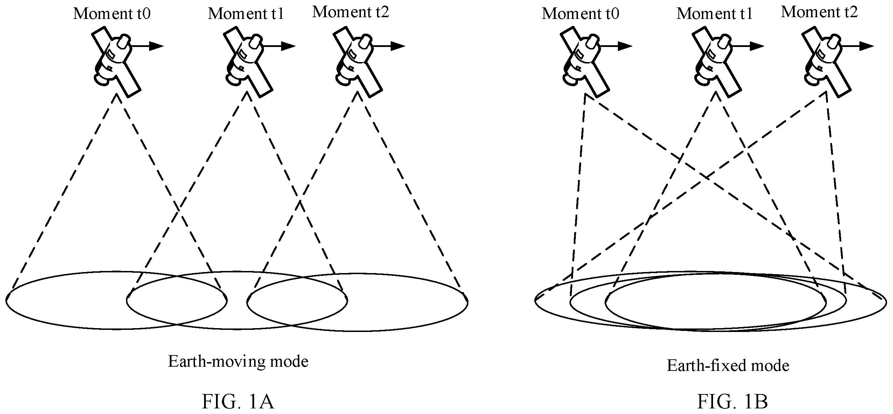

In a satellite communication system, classification may be generally performed according to a working mode of a beam to obtain the earth-moving mode and the earth-fixed mode. As shown in FIG. 1A, in the earth-moving mode, within a period of time (for example, between a moment t0 and a moment t2), a coverage range of a satellite beam moves with a satellite. As shown in FIG. 1B, in the earth-fixed mode, within a period of time (for example, between a moment t0 and a moment t2), a satellite dynamically adjusts a beam direction, so that a beam approximately covers a same region on the ground. However, in actual application, due to a precision problem of a beam direction and a distortion problem of beam projections at different incident angles on the ground, in the earth-fixed mode, a coverage region of a beam still jitters to some extent as time changes.

For example, the beam may be represented in a protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, or a QCL indication. The beam may be indicated by using a transmission configuration indication (transmission configuration indication, TCI) state (TCI-state) parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state, the spatial relation, or the like. The foregoing terms are equivalent to each other. In this application, the beam may alternatively be replaced with another term for representing a beam. This is not limited in this application.

3. NTN service region description

In a first possible implementation, contours (which may be understood as projections of beams on the ground) corresponding to antenna gains or received powers of different regions on the ground may be calculated based on an antenna pattern, for example, a given antenna model, to represent a service region of a satellite/cell. The contour may also be understood as a beam position.

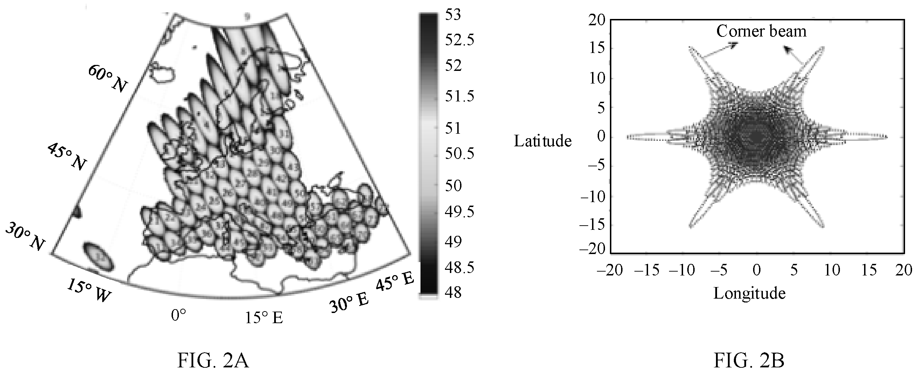

For example, as shown in FIG. 2A, an antenna gain pattern of a single GEO satellite 72-beam reference system is shown. An ellipse represents a projection of a beam on the ground, or represents a beam position. As shown in FIG. 2B, an ellipse is a contour of a beam of an LEO satellite in an earth-moving mode on a longitude and latitude plane.

In a first possible implementation, because a projection of a beam on the ground is understood as a beam position, it may be considered that the beam position is statically bound to the beam. Therefore, this solution is usually used for GEO satellite networks or satellite networks in the earth-moving mode. However, in an earth-fixed mode, an elevation angle between the satellite and a specific region on the ground changes dynamically, and the beam projection changes accordingly. Therefore, the solution of statically binding the beam position and the beam may be no longer applicable. In addition, because the projection of the beam on the ground is used as the beam position, a specific beam position can be only determined based on parameters such as a beam reference point, a beam coverage region contour, and a satellite motion vector. In this case, relatively large signaling overheads are required.

In a second possible implementation, a surface of the earth may be divided into a regular pentagon grid or a regular hexagon grid based on the H3 geographical grid, and the grid may be used to represent a service region of a satellite/cell. For example, the service region of the satellite/cell may include one or more grids. Each grid may be understood as a beam position. For example, when division is performed based on the H3 geographical grid, the earth is considered as an icosahedron. Each face of the icosahedron is a spherical triangle. The icosahedron has 12 vertices, and is referred to as a spherical icosahedron (spherical icosahedron). All faces of the spherical icosahedron have hexagons arranged in a same manner.

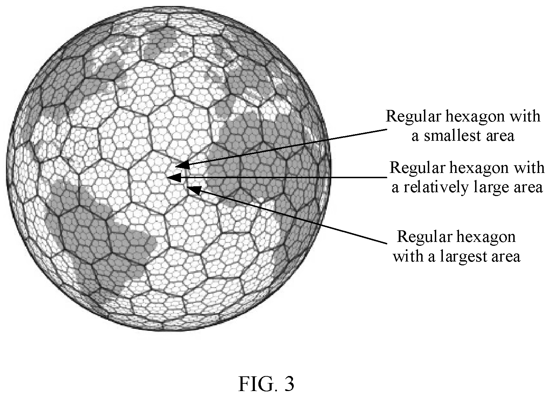

The second possible implementation supports hierarchical addressing of beam positions. For example, as shown in FIG. 3, there are three types of regular hexagons with small, medium, and large areas. A regular hexagon with a smallest area represents a beam position, and regular hexagons with the remaining two types of areas may be used for hierarchical addressing of beam positions. For ease of description, a regular hexagon with a largest area and a regular hexagon with a second largest area are respectively referred to as a first regular hexagon and a second regular hexagon in the following embodiments.

Based on the example shown in FIG. 3, during hierarchical addressing of beam positions, an index of the first regular hexagon may be understood as a first-layer index of a beam position, an index of the second regular hexagon may be understood as a second-layer index of a beam position, and an index of the regular hexagon with the smallest area may be understood as a third-layer index of a beam position. When a beam position is indexed, a first regular hexagon to which the beam position belongs may be first determined based on a first-layer index, then a second regular hexagon to which the beam position in the first regular hexagon belongs is determined based on a second-layer index, and finally the beam position in the second regular hexagon is determined based on a third-layer index.

In the second possible implementation, currently, beam position radii with only 16 types of different precision are supported, and therefore it is difficult to adapt to different load capabilities (for example, beam radii). For example, when precision of a beam position radius is at an integer level but a beam radius is not an integer, the beam position cannot be used to accurately represent a service region of a satellite/cell. In addition, in this solution, when a specific geographical location of a beam position is determined based on an index value of the beam position, the specific geographical location usually needs to be determined in an iterative cycle manner, and an accurate location of the beam position cannot be quickly calculated. In addition, the index value of the beam position is usually indicated by using 64 bits, and signaling overheads are relatively high.

4. Group switching and group reselection

Motion of a satellite causes group switching of a terminal device in a connected state in a specific region, or causes group reselection of a terminal device in an idle state in the region.

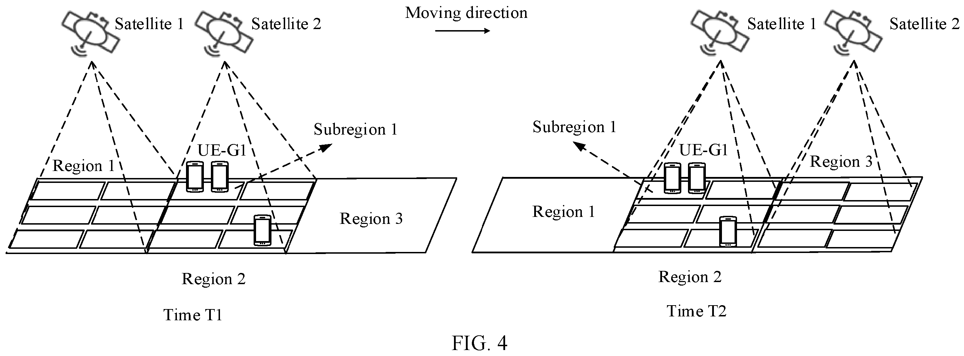

Group switching is used as an example. As shown in FIG. 4, it is assumed that a UE cluster (denoted as UE-G1, including a plurality of UEs) exists in a subregion 1 of a region 2. At a time T1, the subregion 1 is served by one or more beams of a satellite 2. At a time T2, the satellite 2 cannot continue serving the subregion 1 due to motion of the satellite 2, and the satellite 2 is replaced by one or more beams of a satellite 1 to serve the subregion 1. In this process, because a satellite covering the subregion 1 changes, the plurality of UEs in the UE-G1 perform group switching, and are handed over from the satellite 2 to the satellite 1.

Because a moving speed of a satellite is relatively high, for example, a moving speed of an LEO satellite is about 7.5 km/s, and a group switching frequency is relatively high and is about once in several seconds to dozens of seconds.

5. Beam management

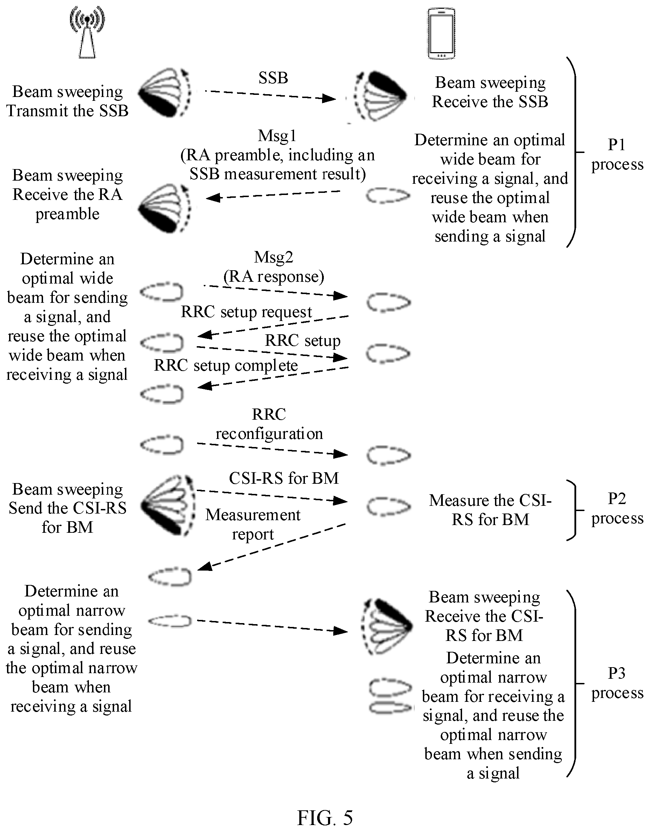

For example, a beam management procedure in an NR system is shown in FIG. 5. First, a base station (for example, a next generation NodeB (next generation NodeB, gNodeB or gNB)) sends synchronization signal block (synchronization signal block, SSB) beams in different directions in a time division manner in a cell coverage range in a beam sweeping manner. Correspondingly, a terminal device receives an SSB in a beam sweeping manner, and measures signal quality of each SSB beam.

Subsequently, if the terminal device is in a radio resource control (radio resource control, RRC) idle state, the terminal device performs random access (random access, RA), and sends a message 1 (message 1, Msg1) to the base station. The message 1 carries a random access preamble. The random access preamble carries an SSB index (index) corresponding to an SSB beam with optimal signal quality. After receiving the random access preamble in the beam sweeping manner, the base station may determine the SSB beam with the optimal signal quality as a downlink transmit beam. When receiving an uplink signal, the base station may reuse the downlink transmit beam. In addition, a beam used by the terminal device to receive a downlink signal is the SSB beam with the optimal signal quality, and a downlink receive beam may be reused when the terminal device sends an uplink signal.

If the terminal device is in an RRC connected state, the terminal device sends an SSB measurement result to the base station by using a measurement report, and the base station determines a downlink transmit beam based on the SSB measurement result and reuses the downlink beam when receiving an uplink signal. In addition, the base station may indicate, to the terminal device, the downlink transmit beam determined by the base station, and the terminal device may determine, based on the downlink transmit beam and a beam pairing result, a downlink receive beam that matches the downlink transmit beam.

In addition, the base station may perform beam sweeping by using a narrower channel state information reference signal (channel state information-reference signal, CSI-RS) (CSI-RS for BM) for beam management (beam management, BM) beam near a downlink transmit beam (that is, an optimal SSB beam).

Correspondingly, the terminal device feeds back a measurement result of the CSI-RS for MB beam to the base station by using a measurement report. The base station determines a downlink transmit beam (for example, an optimal CSI-RS for BM beam) based on the measurement result, and reuses the downlink transmit beam when receiving the uplink signal. The terminal device may receive the CSI-RS for BM beam in the beam sweeping manner, to determine the downlink receive beam (for example, the optimal CSI-RS for BM beam), and reuse the downlink receive beam when sending the uplink signal.

In an NTN, a coverage region of a satellite may change with time. Therefore, the satellite needs to frequently indicate a coverage region of the satellite to a terminal device. Currently, the coverage region of the satellite is usually described explicitly, for example, described in a manner of longitude and latitude, a beam direction, and a steering angle, causing high signaling overheads.

On this basis, this application provides a communication method. In the method, the ground may be discrete into some regions that are fixed relative to the earth. Because the region is fixed relative to the earth, that is, a location of the region is fixed relative to the earth, a network device may indicate a coverage region or a service region of the network device to a terminal device by using a region identifier, or may indicate information about the region (for example, indicate a total quantity of regions and/or a region radius) to a terminal device, so that the terminal device can learn of region distribution based on region information. Therefore, a region in which the terminal device is located is determined based on location information and region distribution of the terminal device, and communication is performed based on the region in which the terminal device is located. The network device explicitly indicates a coverage region of the network device to the terminal device. In comparison, signaling overheads can be reduced.

In addition, regions in this application may be classified into a first region and a second region, and a range of the first region is greater than or equal to a range of the second region. In other words, this application may provide region division at a plurality of levels, so that the terminal device determines, based on different connection statuses, regions in which the terminal device is located at different levels, to perform communication in different manners, thereby improving communication flexibility.

The technical solutions in embodiments of this application may be applied to an NTN system such as a satellite communication system, high-altitude platform station (high altitude platform station, HAPS) communication, and an uncrewed aerial vehicle. For example, the technical solutions may be applied to an integrated communication and navigation (integrated communication and navigation, IcaN) system, a global navigation satellite system (global navigation satellite system, GNSS), and the like. The NTN system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5G communication system (for example, an NR system), a device-to-device (device-to-device, D2D) communication system, a machine-to-machine (machine, M2M) communication system, an internet of things (internet of things, IoT) communication system, an internet of vehicles communication system, and a future mobile communication system.

The communication system applicable to this application is merely an example for description. The communication system and the communication scenario applicable to this application are not limited thereto. The communication system and the communication scenario provided in this application do not constitute any limitation on the solutions of this application. A unified description is provided herein. Details are not described below again.

In a possible implementation, a communication system applicable to the solutions of this application may include at least one terminal device and at least one network device. For example, mutual communication may be implemented between terminal devices, between a terminal device and a network device, and between network devices in a wired or wireless manner.

Optionally, the terminal device may be a user-side device having wireless transmission and reception functions, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having wireless transmission and reception functions, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle (uncrewed aerial vehicle, UAV) to uncrewed aerial vehicle (UAV to UAV, U2U) communication capability. The terminal device may be mobile, or may be fixed. This is not specifically limited in this application.

Optionally, the network device may be a network-side device having wireless transmission and reception functions, or may be a chip, a chip system, or a module disposed in the device. The network device is located in a radio access network (radio access network, RAN) of a mobile communication system, and is configured to provide an access service for a terminal device.

In a possible implementation, the network device may be a wireless relay node or a wireless backhaul node. For example, the network device may be used as a layer 1 relay device, and is configured to regenerate a physical layer signal (that is, radio frequency filtering, frequency conversion, and amplification processing), without having another higher protocol layer.

In another possible implementation, the network device may implement a part or all of functions of a base station. For example, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a device that implements functions of a base station in IoT, V2X, D2D, or M2M.

For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, the network device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP or the CU-UP), the DU, and the RU in this application may be implemented by using a software module, a hardware module, or a combination of a software module and a hardware module.

For example, the base station in embodiments of this application may include base stations in various forms, for example, a macro base station, a micro base station (also referred to as a small cell), a relay station, and an access point. This is not specifically limited in embodiments of this application.

Optionally, the network device in embodiments of this application may be deployed on a non-terrestrial platform, for example, deployed on a low-altitude platform (for example, an uncrewed aerial vehicle), a high-altitude platform (for example, an airplane), or a satellite. Therefore, the network device in embodiments of this application may also be referred to as a non-terrestrial network device.

For example, the network device is deployed on a satellite, or the network device is a satellite. The communication system may further include an NTN gateway (NTN gateway) (or referred to as a gateway station). Usually, the NTN gateway is deployed on the ground. The NTN gateway may communicate with a satellite, and a link between the satellite and the NTN gateway may be referred to as a feeder link (feeder link).

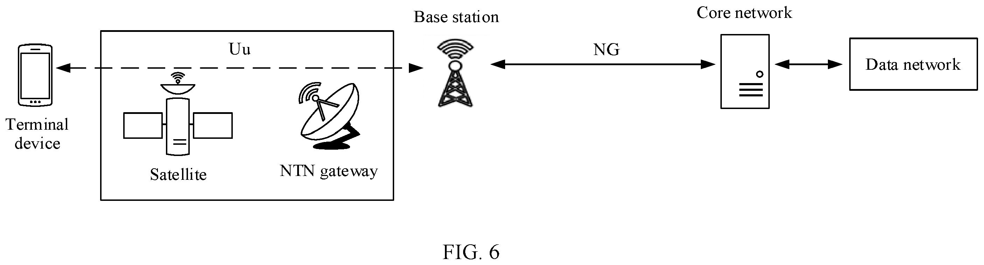

As shown in FIG. 6, when the satellite serves as a radio relay node, in other words, the satellite has a relay forwarding function, the NTN gateway has functions of a base station or a part of functions of a base station. In this case, the NTN gateway may serve as a base station. Alternatively, the NTN gateway and the base station may be separately deployed. In other words, in addition to the NTN gateway, the communication system further includes a satellite base station deployed on the ground. In FIG. 6, description is provided by using an example in which the NTN gateway and the base station are separately deployed.

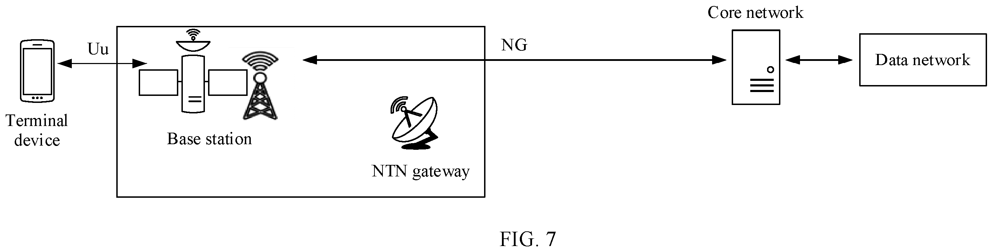

As shown in FIG. 7, when the satellite can implement a part or all of the functions of the base station, the satellite has a data processing capability, and the satellite may be used as a base station. In this case, the NTN gateway and the satellite may transmit user plane data of a terminal device through a satellite radio interface (satellite radio interface, SRI).

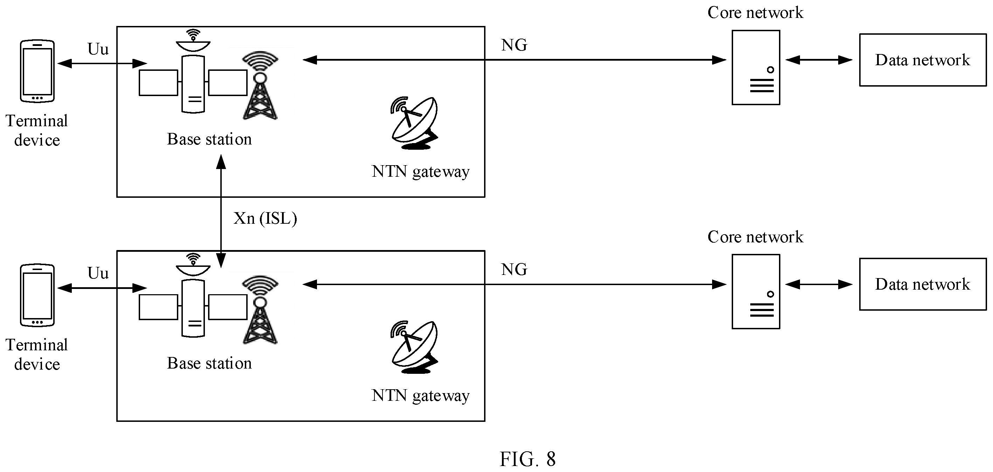

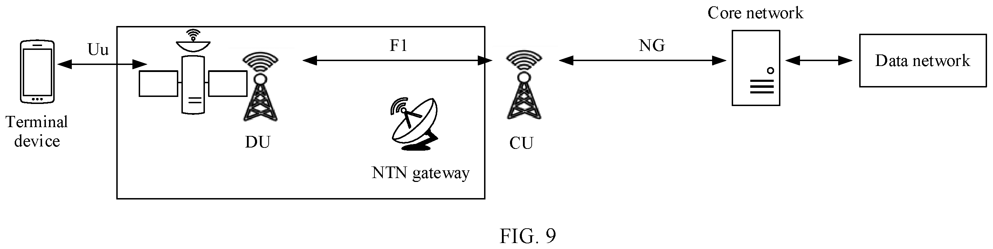

In addition, when the satellite can implement a part or all functions of the base station, as shown in FIG. 8, there is an inter-satellite link (inter-satellite link, ISL) between different satellites, and the satellites may communicate with each other through the ISL. Alternatively, as shown in FIG. 9, the satellite may have a DU processing function of the base station, or the satellite can be used as a DU. In this scenario, a CU processing function of the base station may be deployed on the ground, and the CU and the DU communicate with each other by using an F1 interface through the NTN gateway.

In the architectures shown in FIG. 6 to FIG. 9, an NG is an interface between a base station and a core network. Uu is an interface between a base station and a terminal device. Xn is an interface between base stations. It may be understood that, with evolution of a communication system, a name of an interface between a base station and a core network, a name of an interface between a base station and a terminal device, and a name of an interface between base stations may also change. This is not specifically limited in this application.

Optionally, when the satellite is used as a wireless relay node and has a relay forwarding function, it may be considered that the satellite works in a transparent (transparent) mode. If the satellite has the data processing capability and can implement a part or all of the functions of the base station, it may be considered that the satellite works in regenerative (regenerative) mode. A specific satellite may support only the transparent mode or only the regenerative mode, or may support the transparent mode and the regenerative mode, and can be switched between the transparent mode and the regenerative mode.

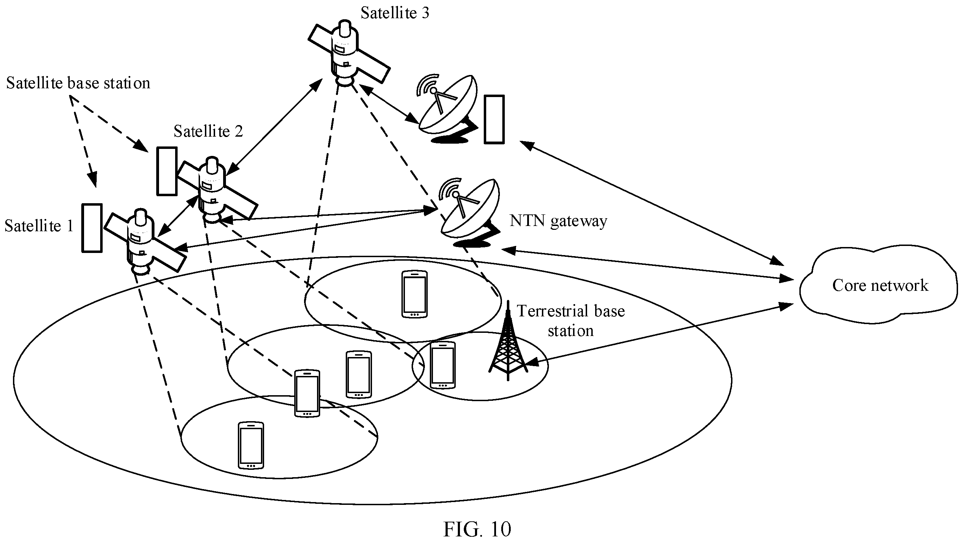

In some implementation scenarios, the NTN and the terrestrial network may be integrated. For example, FIG. 10 shows a converged network architecture of an NTN and a terrestrial network according to an embodiment of this application. In the architecture shown in FIG. 10, a satellite 1 and a satellite 2 work in a regenerative mode; and the satellite may be used as an NTN base station, in other words, the NTN base station may be deployed on the satellite. A satellite 3 works in a transparent mode. Therefore, an additional NTN base station needs to be deployed. The NTN base station indicates a base station in an NTN.

In addition, the architecture may further include a terrestrial base station, and the terrestrial base station is a base station in a terrestrial network. The NTN base station and the terrestrial base station may be interconnected by using a common core network. As a bearer network, the core network provides an interface to a data network, provides communication connection, authentication, management, and policy control for a terminal device, bears a data service, and the like. For example, the core network may include network elements such as an access and mobility management function (access and mobility management function, AMF) network element, a session management function (session management function, SMF) network element, an authentication server function (authentication server function, AUSF) network element, a policy control function (policy control function, PCF) network element, and a user plane function (User Plane Function, UPF) network element.

Alternatively, the NTN base station and the terrestrial base station may implement assistance and interconnection with higher time validity by using an interface defined between base stations. For example, an interface between base stations may be an Xn interface, and an interface between a base station and a core network may be an NG interface. Certainly, the interface between base stations and the interface between a base station and a core network may alternatively be implemented in another manner. This is not specifically limited in this application.

Optionally, in embodiments of this application, the satellite may provide a service for the terminal device by using a beam. For example, different beams may provide services for terminal devices in one or more of time division, frequency division, and spatial division. The satellite may work in the regenerative mode, or may work in the transparent mode. In addition, the satellite may work in an earth-moving mode or in an earth-fixed mode. The satellite may be an LEO satellite, an MEO satellite, a GEO satellite, or the like. This is not limited.

It may be understood that the satellites in the architectures in FIG. 6 to FIG. 10 may be replaced with terrestrial loads on other flight platforms such as an uncrewed aerial vehicle and an airplane.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to the communication systems shown in FIG. 6 to FIG. 10, the following describes the communication method provided in embodiments of this application by using interaction between a network device and a terminal device as an example.

It should be noted that in the following embodiments of this application, a name of a message between devices, a name of each parameter, a name of each piece of information, or the like is merely an example, and may be another name in another embodiment. This is not specifically limited in the method provided in this application.

It may be understood that an execution body in embodiments of this application may perform a part or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

In an example, in the following embodiments, the foregoing flight platform is a satellite, that is, satellite communication in the NTN is used as an example for description. Certainly, the method may also be applied to another scenario in the NTN, for example, an LAP subnetwork or an HAP subnetwork. This is not specifically limited herein.

For ease of understanding of the technical solutions in embodiments of this application, the following first briefly describes nouns related to this application.

1. Region

Unless otherwise specified, "region" in the following embodiments of this application is a geographical region. The region is fixed relative to the earth, or the region is understood as a geographical region fixed relative to the earth. For example, the region may have at least one of the following attributes: a shape, a contour, a size, a radius, an area, a geographical location, and the like.

The "region" may further have a height attribute. In other words, the region may be understood as a geographical region of a given height or a given height range. By default, the region may be a geographical region with an altitude of 0 kilometers (km) or about 0 km (for example, within a range of [-2, 2] km) from the ground, or a geographical region with an average altitude. In addition, the geographical region may alternatively be another geographical region of another specific height or another specific height range, for example, a geographical region with an altitude of 10 km, or a geographical region with an altitude of about 10 km (for example, within a range of [7, 13] km).

In a possible implementation, the region fixed relative to the earth may also be referred to as a "beam position", a "geographical region", or the like. Certainly, the region may alternatively have another name. A name of the region fixed relative to the earth is not specifically limited in this application.

Shapes, contours, sizes, radii, and areas of different regions may be the same or may be different. Different regions have different geographical locations. Different regions may overlap or may not overlap.

In a possible implementation, that the region is fixed relative to the earth may be understood as follows: the contour, the size, or the geographical location of the region does not change. For example, the contour, the size, or the geographical location of the region does not change with time. Alternatively, the region being fixed relative to the earth may be understood as follows: The region contour and points in the region may be described by using a three-dimensional coordinate system such as an earth-centered earth-fixed (earth-centered earth-fixed, ECEF) coordinate system, a geodetic coordinate system (geodetic coordinate system), or an earth-centered inertial (earth-centered inertial, ECI) coordinate system; or coordinates of each point in the region contour in a three-dimensional coordinate system such as an ECEF, a geodetic coordinate system, or an ECI coordinate system are fixed.

In a possible implementation, the shape of the region may be a regular hexagon, or may be another shape such as a regular pentagon, a circle, or an ellipse. Alternatively, the shape of the region may be an irregular shape. This is not limited.

For example, the shape of the region may be defined in a protocol, or may be defined by the network device. Region shapes defined by different network devices may be the same or may be different. A same network device may also define a plurality of region shapes. Similarly, the size, the radius, and the area of the region may also be defined in a protocol, or may be defined by the network device. Region sizes, radii, and areas defined by different network devices may be the same or may be different. A same network device may also define a plurality of region sizes, a plurality of region radii, or a plurality of region areas.

In a possible implementation, the earth may be divided into a plurality of regions, and the plurality of regions are indexed (for example, numbered).

In a possible division manner, the geographical location of the region is determined based on an identifier of the region, that is, the geographical location of the region may be obtained based on the identifier of the region. In other words, there is an association relationship between the identifier of the region and the geographical location of the region. For example, a plurality of regions may be discretely obtained on the earth, each region corresponds to one identifier, and the geographical location of the region may be obtained based on the identifier of the region.

Further, the geographical location of the region may be further determined based on at least one of the following: a total quantity $N_{spot}$ of regions, the radius $R_{spot}$ of the region, or the earth radius $R_e$.

For example, the total quantity of regions may be understood as a total quantity of regions discretely obtained on the earth. The $N_{spot}$ regions can fully cover the earth, for example, any location on the earth belongs to a specific region; or the $N_{spot}$ regions can cover some geographical locations on the earth. For example, the $N_{spot}$ regions may not cover the south pole and/or the north pole of the earth, that is, the south pole and/or the north pole may not include the regions. $N_{spot}$ is a positive integer, for example, $N_{spot}$ = 78702.

For example, radii of the $N_{spot}$ regions may be the same, that is, a radius of each region is $R_{spot}$. When the shape of the region is a regular hexagon, the radius of the region may be a radius of a circumcircle of the regular hexagon. When the shape of the region is a circle, the radius of the region may be a radius of a circle. When the shape of the region is an ellipse, the radius of the region may include a long radius or a short radius. A unit of $R_{spot}$ may be kilometer (km), for example, $R_{spot}$ = 50 kilometers, or may be another length unit such as meter (m). This is not limited.

For example, in this embodiment of this application, the radius of the earth may be a constant, for example, a value of 6378 km. Alternatively, the earth radius may be different for different spatial-temporal location. For example, the earth radius may include an equatorial radius or a polar radius. For example, the polar radius may be used when the south pole and/or the north pole are/is divided into regions, and the equatorial radius may be used when a region other than the north pole and the south pole is divided into regions. Alternatively, when the earth is described by using an ellipsoid (that is, it is considered that a shape of the earth is an ellipsoid), the earth radius may include a major axis and a minor axis, and values of the major axis and the minor axis are different.

In a possible implementation, a total quantity of regions, a radius of a region, and the earth radius may be the same for all regions. In other words, the total quantity of regions, the radius of the region, and the earth radius may be considered as constants. In this case, it may be considered that a variable that affects a geographical location of a region is an identifier of the region.

In a possible implementation, each region includes (or has) one reference location, and the reference location may be, for example, a central location of the region. For example, the geographical location of the region may be a geographical location of a reference location in the region. In this case, the geographical location of the region is determined based on the identifier of the region. It may be understood that the reference location in the region is determined based on the identifier of the region. Alternatively, the geographical location of the region may represent the contour of the region or a range of the region. In this case, the geographical location of the reference location in the region may be determined based on the identifier of the region, and then the range or the contour of the region may be determined based on the geographical location of the reference location and the radius of the region.

In a possible implementation, an association relationship between the reference location in the region and the identifier of the region is determined according to a Fibonacci rule. In other words, the association relationship between the reference location in the region and the identifier of the region satisfies the Fibonacci rule. For example, the association relationship has the following three implementations:

Manner 1: Three-dimensional coordinates of the reference location in the region and the identifier of the region satisfy the following relationship (1):

$$RL(i) = R_e \times (\cos \varphi_i \sin \theta_i , \sin \varphi_i \sin \theta_i , \cos \theta_i) \ (1)$$

$$\varphi_i = 2\pi \left[ \frac{2i}{1 + \sqrt{5}} \right]$$

$$\theta_i = \cos^{-1} \left( 1 - \frac{2i + 1}{N_{spot}} \right), i \in \{0, \cdots, N_{spot} - 1\}$$

Herein, *i* represents the identifier of the region, $R_e$ indicates the earth radius, [*x*] indicates a fractional part of *x*, for example, *x* = 2.3. In this case, [*x*] = 0.3. $N_{spot}$ indicates a total quantity of regions. $RL(i)$ represents the three-dimensional coordinates of the reference location in the region, and the three-dimensional coordinates are coordinates in a three-dimensional coordinate system. For example, the three-dimensional coordinate system may be a spherical coordinate system, for example, an ECEF coordinate system. Certainly, the three-dimensional coordinate system may alternatively be another three-dimensional coordinate system, for example, a geodetic coordinate system (geodetic coordinate system) or an earth-centered inertial (earth-centered inertial, ECI) coordinate system.

For example, a projection $RL(x_i, y_i)$ of the reference location on a unit square and the identifier of the region satisfy the following relationship:

$$RL(x_i) = (1 - cos\theta_i)/2,$$

and

$$RL(y_i) = \varphi_i (2\pi)^{-1} = \left[ \frac{2i}{1+\sqrt{5}} \right].$$

For $\theta_i$ and $\varphi_i$, refer to the foregoing related descriptions. The unit square is a square whose vertexes are located at (0, 0), (1, 0), (0, 1), and (1, 1) on a Cartesian plane. $RL(x_i)$ represents a projection metric of the reference location in an x-axis direction of the unit square, and $RL(y_i)$ represents a projection metric of the reference location in a y-axis direction of the unit square.

For example, Cartesian coordinates $RL(x_i, y_i)$ of the reference location in a Fibonacci grid and the identifier of the region satisfy the following relationship:

$$RL(x_i) = i/N_{spot},$$

and

$$RL(y_i) = \left[ \frac{i}{\emptyset} \right], \emptyset = \frac{1+\sqrt{5}}{2}.$$

*[x]* indicates a fractional part of *x*. $RL(x_i)$ represents a projection metric of the reference location in the region in an x-axis direction of the Cartesian coordinate system, and $RL(y_i)$ represents a projection metric of the reference location in the region in a y-axis direction of the Cartesian coordinate system. For example, the Cartesian coordinate system is a Cartesian orthogonal coordinate system.

Manner 2: Three-dimensional coordinates of the reference location in the region and the identifier of the region satisfy the following relationship (2):

$$RL(i) = R_e \times (\sqrt{1 - z_i^2} \cos 2\pi i \ \emptyset, \sqrt{1 - z_i^2} \sin 2\pi i \ \emptyset, z_i) \ (2)$$

$$z_i = \frac{2i - 1}{N_{spot}} - 1, i \in \{1, \cdots, N_{spot}\}$$

$$\emptyset = \frac{1 + \sqrt{5}}{2}$$

For physical meanings of the parameters, refer to related descriptions in the foregoing relationship (1). Details are not described herein again.

It may be understood that the three-dimensional coordinates of the reference location shown in the relationship (1) and the relationship (2) may be equivalently converted into a longitude and latitude location. A specific representation form of the reference location is not limited in this application.

Manner 3: Longitude and latitude coordinates of the reference location in the region and the identifier of the region satisfy the following relationship (3):

$$RL(i) = (\text{lon}(i), \text{lat}(i)) \ (3)$$

$$\text{lon}(i) = \sin^{-1}(\frac{2i}{2N+1}), N = \frac{N_{spot} - 1}{2}$$

$$\text{lat}(i) = 2\pi i \emptyset^{-1}, i \in \{1, \cdots, N_{spot}\}, \emptyset = \frac{1 + \sqrt{5}}{2}$$

RL(i) represents the longitude and latitude coordinates of the reference location, for example, lon(i) represents longitude of the reference location, and lat(i) represents latitude of the reference location. $N_{spot}$ indicates a total quantity of regions.

It may be understood that the longitude and latitude coordinates of the reference location shown in the relationship (3) may be equivalently converted into three-dimensional coordinates. A specific representation form of the reference location is not limited in this application.

In a possible implementation, the radius of the region and the total quantity of regions satisfy the following relationship (4):

$$N_{spot} = \frac{8\pi R_e^2}{3\sqrt{3}R_{spot}^2} \ (4)$$

$R_e$ represents the earth radius, $N_{spot}$ represents the total quantity of regions, and $R_{spot}$ represents the radius of the region. For explanations of the parameters, refer to the foregoing related descriptions. Details are not described herein again.

Based on the foregoing region division manner, in one aspect, coordinates of a reference location in a region can be quickly and accurately determined based on an identifier of the region, so that a contour, a geographical location, and the like of the region can be quickly and accurately determined. In another aspect, a radius of the region can be flexibly adjusted to adapt to different load capabilities, for example, to adapt to different beam radii. In still another aspect, because the geographical location of the region can be determined based on the identifier of the region, information exchange may be performed between a network device and a terminal device based on the identifier of the region. Signaling overheads can be significantly reduced in this design compared with directly exchanging information such as a beam reference point and a beam coverage region contour. Unlike a manner of performing division based on an H3 geographical grid, because a total quantity of regions is relatively small, a quantity of bits required for indicating a region identifier is also relatively small, thereby reducing signaling overheads.

2. Coverage region of a network device

The coverage region of the network device may be a largest region that can be covered by the network device. In other words, the coverage region of the network device indicates (or reflects) a maximum coverage capability of a first network device.

The coverage region of the network device varies with movement of the network device. In other words, coverage regions of the network device may be different at different moments. The coverage region of the network device includes at least one of the foregoing regions (that is, beam positions).

The coverage region of the network device changes with movement of the network device, and a region (beam position) is fixed relative to the earth. Therefore, beam positions included in the coverage region of the network device may be different at different moments.

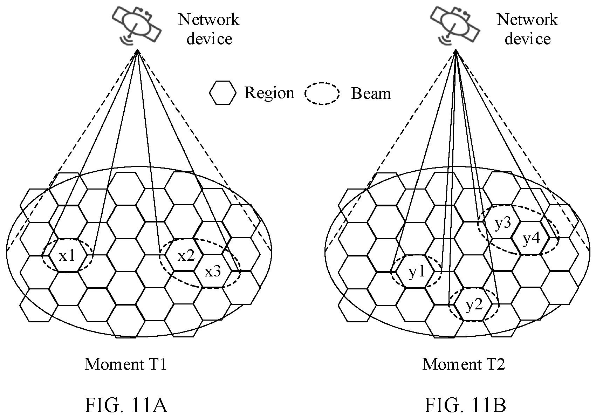

For example, the shape of the region is a regular hexagon. As shown in FIG. 11A and FIG. 11B, a solid line of an ellipse may represent the coverage region of the network device. Regions represented by all regular hexagons in a solid-line ellipse are regions included in the coverage region of the network device.

3. Service region of a network device

The service region of the network device may be a largest region that can be served (or covered) by a beam of the network device. In other words, the service region of the network device indicates (or reflects) a maximum service capability of a first network device.

The service region of the network device is less than or equal to the coverage region of the network device. For example, based on the example shown in FIG. 11A and FIG. 11B, the service region of the first network device may be a range represented by a solid-line ellipse. In this case, the service region of the first network device is equal to the coverage region of the first network device; or the service region of the first network device may be less than the range represented by the solid-line ellipse.

The service region of the network device varies with movement of the network device. In other words, service regions of the network device may be different at different moments. The service region of the network device includes at least one of the foregoing regions (that is, beam positions).

The service region of the network device changes with movement of the network device, and a region (beam position) is fixed relative to the earth. Therefore, beam positions included in the service region of the network device may be different at different moments.

In addition, at a specific moment, the beam of the network device may actually serve (or cover) a part of regions in the service region; and at different moments, the beam of the network device may serve (or cover) different regions in the service region, for example, regions x1, x2, and x3 in the beam service region of the network device at a moment T1 shown in FIG. 11A, and regions y1, y2, y3, and y4 in the beam service region of the network device at a moment T2 shown in FIG. 11B.

4. Active region of a network device

A region that is currently served (or covered) by the beam of the network device may be referred to as an active region or an activated region. A region that is currently not served (or covered) by the beam of the network device may be referred to as an inactive region or an unactivated region.

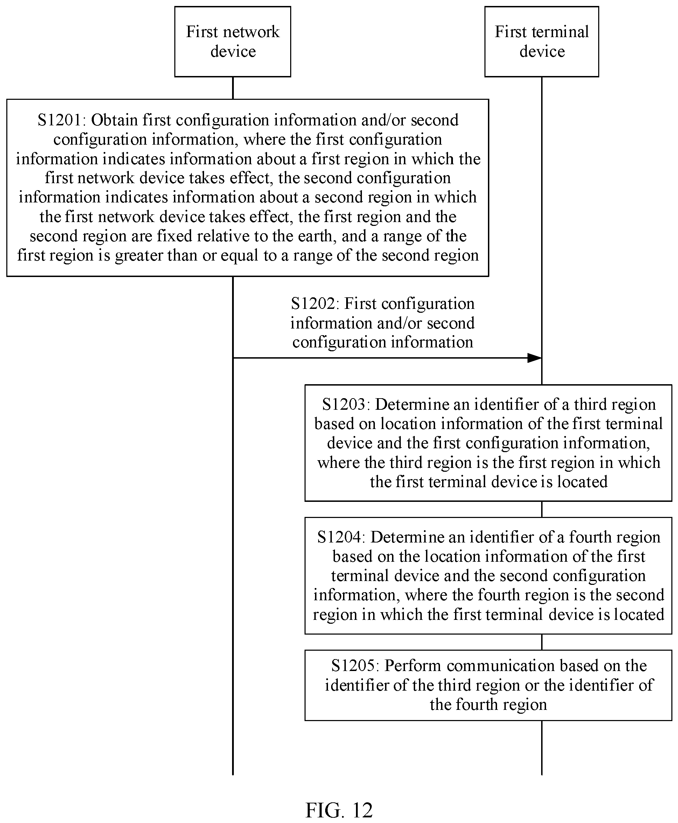

The following describes the communication method provided in embodiments of this application. FIG. 12 is a flowchart of a communication method according to an embodiment of this application. The communication method may include the following steps.

S1201: A first network device obtains first configuration information and/or second configuration information.

The first configuration information indicates information about a first region in which the first network device takes effect, or the first configuration information indicates distribution or division of a first region corresponding to the first network device.

The first region is fixed relative to the earth. The first region is a type of the foregoing region and satisfies all characteristics of the foregoing described region. For example, a geographical location of the first region is determined based on an identifier of the first region. Further, the geographical location of the first region is further determined based on at least one of the following: a radius of the first region, an earth radius, or a total quantity of first regions. The total quantity of first regions may be understood as a total quantity of first regions discretely obtained on the earth. For details, refer to the foregoing related descriptions of the region. Details are not described herein again.

The second configuration information indicates information about a second region in which the first network device takes effect, or the first configuration information indicates distribution or division of a second region corresponding to the first network device.

The second region is fixed relative to the earth. The second region is a type of the foregoing region and satisfies all characteristics of the foregoing described region. For example, a geographical location of the second region is determined based on an identifier of the second region. Further, the geographical location of the second region is further determined based on at least one of the following: a radius of the second region, the earth radius, or a total quantity of second regions. The total quantity of second regions may be understood as a total quantity of second regions discretely obtained on the earth. For details, refer to the foregoing related descriptions of the region. Details are not described herein again.

A range (or an area) of the first region is greater than or equal to a range (or an area) of the second region. For example, one first region may include one or more second regions.

For example, the first region may also be referred to as a "broadcast region", a "broadcast beam position", or a "broadcast geographical region", and the second region may also be referred to as a "service region", a "service beam position", or a "service geographical region".

For example, the first region may be a region that can be served or covered by a broadcast beam of the first network device, and the second region may be a region that can be served or covered by a traffic beam of the first network device. The broadcast beam of the first network device may be used to send and/or receive broadcast information (such as system information), and the traffic beam of the first network device may be used to send and/or receive service data. The broadcast beam of the first network device may be a wide beam, and the traffic beam of the first network device may be a narrow beam.

In a possible implementation, the information about the first region includes the total quantity $N_{spot\_b}$ of first regions and/or the radius $R_{spot\_b}$ of the first region. In other words, the first configuration information indicates the total quantity of first regions and/or the radius of the first region.

In a possible implementation, the information about the second region includes the total quantity $N_{spot\_b}$ of second regions and/or the radius $R_{spot\_s}$ of the second region. In other words, the second configuration information indicates the total quantity of second regions and/or the radius of the second region.

For example, when a total quantity of regions is known, an identifier of a region may be learned. For example, the region identifier belongs to $1, 2, ..., N_{spot}$, and a geographical location of each region may be learned based on an identifier of each region. For example, the region identifier and a reference location of the region satisfy one of the foregoing relationship (1) to relationship (3), to learn of geographical locations of $N_{spot}$ regions, that is, distribution of the regions. The region may be a first region or a second region, and $N_{spot}$ may be $N_{spot\_b}$ or $N_{spot\_s}$.

In addition, when a radius of the region is known, the total quantity of regions may be determined based on a relationship between the radius of the region and the total quantity of regions, for example, the relationship (4); and then the geographical location of each region is determined based on the region identifier, to determine the distribution of the regions.

For example, the configuration information may include a specific value of the total quantity $N_{spot}$ of regions and/or a specific value of the radius $R_{spot}$ of the region. Alternatively, a protocol may predefine a plurality of total quantities of regions, or the first network device and the terminal device may negotiate a plurality of total quantities of regions in advance. For example, the first network device may pre-configure the plurality of total quantities of regions for the terminal device by using RRC signaling. In this scenario, the configuration information may include a total region quantity index, and the total region quantity index corresponds to one of a plurality of total region quantities. For example, the total region quantity index may be carried in a media access control (media access control, MAC) control element (control element, CE) or downlink control information (downlink control information, DCI).

For example, $N$ total region quantities are defined, and the configuration information may include an index $n$, where $n \in 1, 2, ..., N$. In this case, the total region quantity indicated by the configuration information is an $n^{th}$ total region quantity in the $N$ total region quantities. The region may be a first region or a second region. The configuration information may be first configuration information or second configuration information. $N_{spot}$ may be $N_{spot\_b}$ or $N_{spot\_s}$. $R_{spot}$ may be $R_{spot\_b}$ or $R_{spot\_s}$.

In a possible implementation, the first network device obtaining the first configuration information and/or the second configuration information may include: the first network device determines or generates the first configuration information and/or the second configuration information; or the first network device receives the first configuration information and/or the second configuration information from a territorial device. In other words, the first configuration information and/or the second configuration information are/is generated by the terrestrial device and sent to the first network device.

For example, when the first network device is a device deployed on a satellite and has a part or all of functions of a base station, the first network device determines or generates the first configuration information and/or the second configuration information. When the first network device is deployed on a satellite and works in a transparent mode, the first network device receives the first configuration information and/or the second configuration information from a core network element or an NTN base station deployed on the ground.

S1202: The first network device sends the first configuration information and/or the second configuration information to a first terminal device. Correspondingly, the first terminal device receives the first configuration information and/or the second configuration information from the first network device.

In a possible implementation, if the first network device obtains the first configuration information in step S1201, the first network device sends the first configuration information in step S1202; or if the first network device obtains the second configuration information in step S1201, the first network device sends the second configuration information in step S1202.

For example, the first network device may send the first configuration information and/or the second configuration information in a broadcast manner. In this case, the first terminal device may be any terminal device that receives the first configuration information and/or the second configuration information. Alternatively, the first network device may send the first configuration information and/or the second configuration information to the first terminal device in a unicast manner. For example, the first network device sends the first configuration information and/or the second configuration information to the first terminal device through an RRC connection to the first terminal device.

S1203: The first terminal device determines an identifier of a third region based on location information of the first terminal device and the first configuration information. The third region is a first region in which the first terminal device is located.

In a possible implementation, when receiving the first configuration information from the first network device in step S1202, or receiving the first configuration information and the second configuration information, the first terminal device performs step S1203.

For example, the location information of the first terminal device may be GNSS location information of the first terminal device. The third region may be a first region that is in the $N_{spot\_b}$ first regions indicated by the first configuration information and whose reference location is closest to the first terminal device.

For example, when the first configuration information indicates the total quantity $N_{spot\_b}$ of first regions and/or the radius $R_{spot\_b}$ of the first region, after receiving the first configuration information, the first terminal device may learn of the total quantity $N_{spot\_b}$ of first regions, to learn of the identifier of the first region. For example, the identifier of the first region belongs to $1, 2, ..., N_{spot\_b}$. A geographical location of a reference location in each first region may be learned based on an identifier of each first region. For example, the identifier of the first region and the reference location of the first region satisfy one of the foregoing relationships (1) to (3). In this way, a distance between the first terminal device and the reference location in each first region can be learned, and a first region to which a reference location closest to the first terminal device belongs is determined as the third region.

S1204: The first terminal device determines an identifier of a fourth region based on the location information of the first terminal device and the second configuration information. The fourth region is a second region in which the first terminal device is located.

In a possible implementation, when receiving the second configuration information from the first network device in step S1202, or receiving the first configuration information and the second configuration information, the first terminal device performs step S1204.

For example, the location information of the first terminal device may be GNSS location information of the first terminal device. The fourth region may be a second region that is in the $N_{spot\_b}$ second regions indicated by the second configuration information and whose reference location is closest to the first terminal device. Refer to related descriptions of determining the third region in step S1203. Details are not described herein again.

It should be noted that the first terminal device may perform step S1203 and not perform step S1204; or the first terminal device may perform step S1204 and not perform step S1203; or the first terminal device may perform step S1203 and step S1204.

S1205: The first terminal device performs communication based on the identifier of the third region or the identifier of the fourth region.

In a possible implementation, when the first terminal device performs step S1203, in step S1205, the first terminal device performs communication based on the identifier of the third region; or when the first terminal device performs step S1204, in step S1205, the first terminal device performs communication based on the identifier of the fourth region.

In a possible implementation, when the first terminal device is in an RRC non-connected state (for example, an RRC idle mode or an RRC inactive mode), the first terminal device performs communication based on the identifier of the third region; or when the first terminal device is in an RRC connected state, the first terminal device performs communication based on the identifier of the fourth region.

In a possible implementation, the first terminal device performing communication may include: the first terminal device accesses a network device (for example, initiates random access), or the first terminal device and the network device perform information and/or data transmission. For example, when the first terminal device is in an RRC non-connected state, the first terminal device accesses the network device; or when the first terminal device is in an RRC connected state, information and/or data transmission is performed between the first terminal device and the network device.

Based on the foregoing solution, the ground may be discrete into some regions that are fixed relative to the earth. Because the region is fixed relative to the earth, that is, a location of the region is fixed relative to the earth, a network device may indicate a coverage region or a service region of the network device to a terminal device by using a region identifier, or may indicate information about the region (for example, indicate a total quantity of regions and/or a region radius) to a terminal device, so that the terminal device can learn of region distribution based on region information. Therefore, a region in which the terminal device is located is determined based on location information and region distribution of the terminal device, and communication is performed based on the region in which the terminal device is located. The network device explicitly indicates a coverage region of the network device to the terminal device. In comparison, signaling overheads can be reduced.

In addition, regions in this application may be classified into a first region and a second region, and a range of the first region is greater than or equal to a range of the second region. In other words, this application may provide region division at a plurality of levels, so that the terminal device determines, based on different connection statuses, regions in which the terminal device is located at different levels, to perform communication in different manners, thereby improving communication flexibility.

The foregoing describes an overall procedure of the communication method provided in embodiments of this application. The following describes in detail an implementation in which the terminal device performs communication based on the identifier of the third region or the identifier of the fourth region. For example, the terminal device may perform communication in the following several manners:

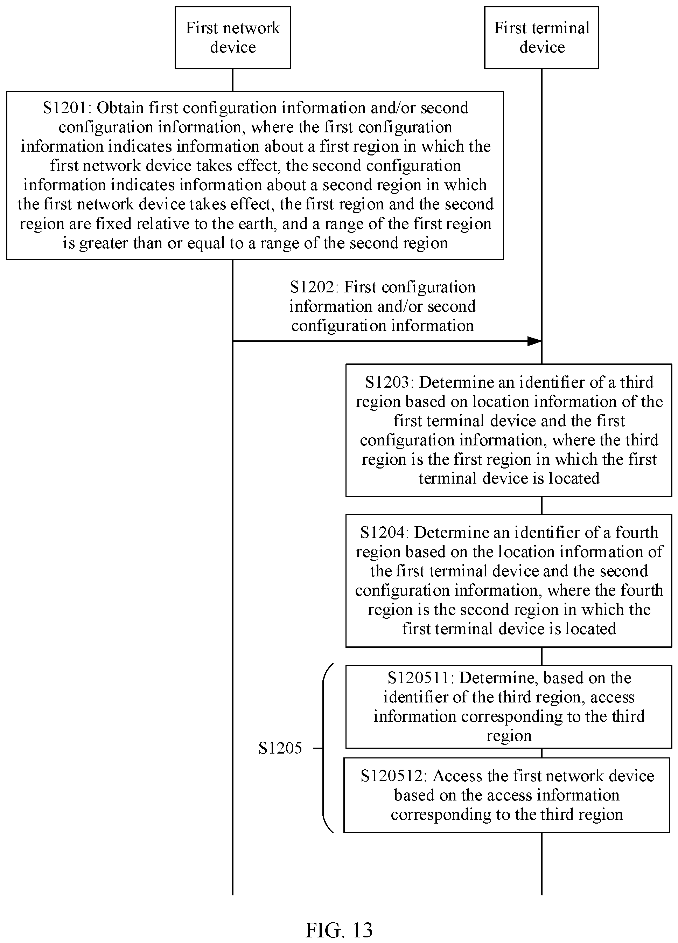

Manner 1: As shown in FIG. 13, the first terminal device performing communication based on the identifier of the third region includes the following steps:

S120511: The first terminal device determines, based on the identifier of the third region, access information corresponding to the third region.

In a possible implementation, the information about the first region further includes access information corresponding to the first region. In other words, the first configuration information further indicates the access information corresponding to the first region. For example, the first configuration information further indicates access information corresponding to each first region in a coverage region or a service region of the first network device, or the first configuration information further indicates access information corresponding to each first region served by a beam (for example, a broadcast beam) of the first network device.

Access information corresponding to a specific first region is used by a terminal device in the first region to access the first network device. For example, the access information corresponding to the first region includes at least one of the following: a random access occasion (RACH occasion, RO), a random access preamble, a timing advance (timing advance, TA), or a first time period.

For example, the RO indicates a time domain resource and/or a frequency domain resource occupied by a random access channel (random access channel, RACH). The first time period is a time period in which the beam of the first network device serves the first region, or the first time period is a time period in which the first network device can be accessed, or the first time period is an effective (or valid) time period of an RO, a random access preamble, or a TA.

Optionally, access information corresponding to different first regions in the coverage region or the service region of the first network device may be the same or may be different, and access information corresponding to different first regions served by the beam of the first network device may be the same or may be different. This is not specifically limited in this application.

For example, the coverage region or the service region of the first network device includes first regions 80 to 150, and the first configuration information may include identifiers of the first regions and access information corresponding to the first regions, for example, {80:RO 1, Random access preamble 1, TA 1, First time period 1}, {81:RO 2, Random access preamble 2, TA 2, First time period 2}, and {82-85:RO 3, Random access preamble 3, TA 3, First time period 3}.

Based on the foregoing implementation, the first terminal device may perform searching based on the identifier of the third region after receiving the first configuration information, and access information corresponding to the identifier of the third region is the access information corresponding to the third region.

S120512: The first terminal device accesses the first network device based on the access information corresponding to the third region.

In a possible implementation, accessing the first network device may include: initiating random access to the first network device, or initiating random access to access the first network device. For example, the first terminal device may send, in a first time period, a random access preamble to the first network device on an RO indicated by the access information corresponding to the third region.

Based on the foregoing manner 1, the first network device may indicate the identifier of the first region and the access information corresponding to the first region, so that the terminal device in the first region can access the first network device based on the access information. Therefore, the first network device may indicate different random access resources for different first regions, so that terminal devices in different first regions can access the first network device on different random access resources, thereby reducing resource collisions during random access performed by the terminal devices and improving an access success rate.

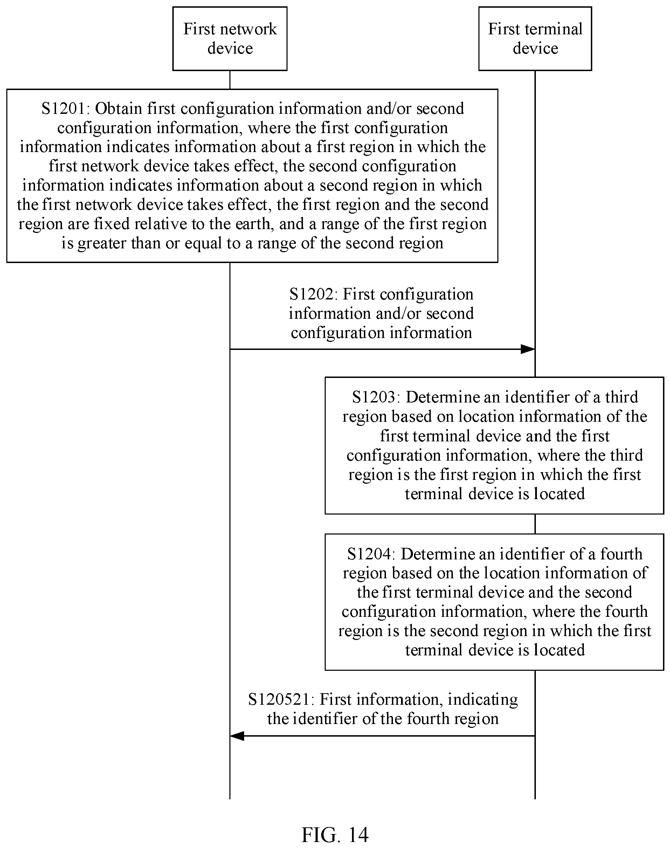

Manner 2: As shown in FIG. 14, the first terminal device performing communication based on the identifier of the fourth region includes the following steps:

S120521: The first terminal device sends first information to the first network device. Correspondingly, the first network device receives the first information from the first terminal device. The first information indicates the identifier of the fourth region.

For example, the first information may include the identifier of the fourth region. Alternatively, the first information may include a bitmap, and bits in the bitmap are in a one-to-one correspondence with identifiers of second regions in the coverage region or the service region of the first network device. The first terminal device may set, to a preset value (for example "1" or "0"), a bit that is in the bitmap and that corresponds to the identifier of the fourth region. In other words, an identifier corresponding to a bit that is set to a preset value in the bitmap is the identifier of the fourth region.

In a possible implementation, after receiving the first information and learning the identifier of the fourth region, the first network device may perform location authentication of the first terminal device based on the identifier of the fourth region.

For example, it is assumed that the first terminal device sends a location (denoted as a location 1) of the first terminal device to the first network device before step S120521. After learning of the identifier of the fourth region, the first network device may determine a reference location of the fourth region based on one or more of the relationship (1) to the relationship (3), and then determine a range of the fourth region based on a radius of the fourth region. If the location 1 is in the fourth region, or a distance between the location 1 and the reference location of the fourth region is less than or equal to a preset threshold, the first network device considers that the location 1 is real.

In another possible implementation, after receiving the first information and learning of the identifier of the fourth region, the first network device may determine the reference location (denoted as a location 2) of the fourth region based on the identifier of the fourth region, determine, based on the radius of the first region and the total quantity of first regions, a first region including the location 2, and determine the first region including the location 2 as the first region (that is, the third region) in which the first terminal device is located. In other words, the first network device may determine, based on the identifier of the fourth region, the first region in which the first terminal device is located.

In still another possible implementation, after receiving the first information and learning of the identifier of the fourth region, the first network device may perform measurement configuration for a terminal device in the fourth region. For example, a neighboring cell set 1 is configured for the terminal device in the fourth region, so that the terminal device in the fourth region measures a neighboring cell in the neighboring cell set 1.

Optionally, the first network device may configure different neighboring cell sets for different second regions. For example, the first network device configures a neighboring cell set 1 for a terminal device in a second region 1, and configures a neighboring cell set 2 for a terminal device in a second region 2. Based on this implementation, compared with configuring a relatively large neighboring cell set for all terminal devices, for example, configuring a neighboring cell set 1 and a neighboring cell set 2, the terminal device can be prevented from performing unnecessary measurement, thereby reducing measurement complexity of the terminal device and reducing power consumption of the terminal device.

In still another possible implementation, after receiving the first information and learning the identifier of the fourth region, the first network device may perform beam management based on the identifier of the fourth region.

For example, the first network device may determine, based on the identifier of the fourth region, the first region (that is, the third region) in which the first terminal device is located. Then, a beam of the fourth region and a beam of the third region may be configured for the first terminal device to satisfy a QCL relationship, so that the first terminal device can implement dynamic and autonomous beam adjustment based on the beam of the fourth region or the beam of the third region. Compared with a conventional solution of performing beam matching based on only signal quality, a speed and flexibility of beam matching can be improved.

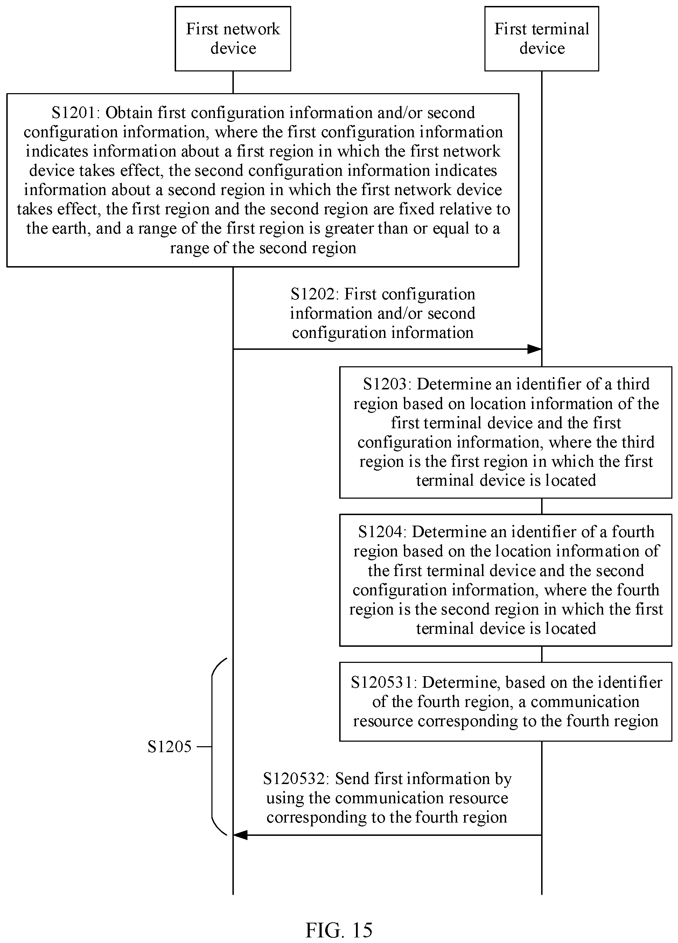

Manner 3: As shown in FIG. 15, the first terminal device performing communication based on the identifier of the fourth region includes the following steps:

S120531: The first terminal device determines, based on the identifier of the fourth region, a communication resource corresponding to the fourth region.

In a possible implementation, the information about the second region further includes a communication resource corresponding to the second region. In other words, the second configuration information further indicates the communication resource corresponding to the second region. For example, the second configuration information further indicates a communication resource corresponding to each second region in the coverage region or the service region of the first network device, or the second configuration information further indicates a communication resource corresponding to each second region served by the beam (for example, the traffic beam) of the first network device.

A communication resource corresponding to a specific second region is used by the terminal device in the second region and the first network device to perform information transmission. For example, the communication resource corresponding to the second region includes at least one of the following: a frequency domain resource, a polarization manner, or a second time period.

For example, the second time period is a time period in which the beam of the first network device serves the second region, or the second time period is an available time period of the frequency domain resource, or the second time period is a time period in which the frequency domain resource takes effect or a valid time period.

Optionally, communication resource information corresponding to the second region may alternatively be understood as bandwidth part (bandwidth part, BWP) information corresponding to the second region. In this case, the frequency domain resource may be understood as a frequency of a BWP, for example, a center frequency of the BWP.

Optionally, communication resources corresponding to different second regions in the coverage region or the service region of the first network device may be the same or may be different, and communication resources corresponding to different second regions served by the beam of the first network device may be the same or may be different. This is not specifically limited in this application.

For example, the coverage region or the service region of the first network device includes second regions 50 to 160, and the second configuration information may include identifiers of the second regions and communication resource information corresponding to the second regions, for example, {50:Communication resource 1}, {51:Communication resource 2}, and {52-60:Communication resource 3}.

Based on the foregoing implementation, after receiving the second configuration information, the first terminal device may perform searching based on the identifier of the fourth region, and a communication resource corresponding to the identifier of the fourth region is a communication resource corresponding to the fourth region.

S120532: The first terminal device sends the first information to the first network device by using the communication resource corresponding to the fourth region. Correspondingly, the first network device receives the first information from the first terminal device on the communication resource corresponding to the fourth region.

The first information indicates the identifier of the fourth region. For implementation of the first information, refer to the related descriptions in step S120521. Details are not described herein again.

For example, the first terminal device may send the first information to the first network device on a frequency domain resource corresponding to the fourth region in the second time period.

After receiving the first information, the first network device may perform related processing. For details, refer to related descriptions in step S120521. Details are not described herein again.

Based on the foregoing manner 3, the first network device may indicate the identifier of the second region and the communication resource corresponding to the second region, so that a terminal device in the second region can communicate with the first network device by using the communication resource. Therefore, the first network device may indicate different communication resources for different second regions, so that terminal devices in different second regions can communicate with the first network device on different resources, thereby reducing resource collisions and improving communication performance.

It may be understood that the foregoing manner 1 and manner 2, or the foregoing manner 1 and manner 3 may be all performed. For example, after accessing the first network device based on the identifier of the third region, the first terminal device sends the first information to the first network device.

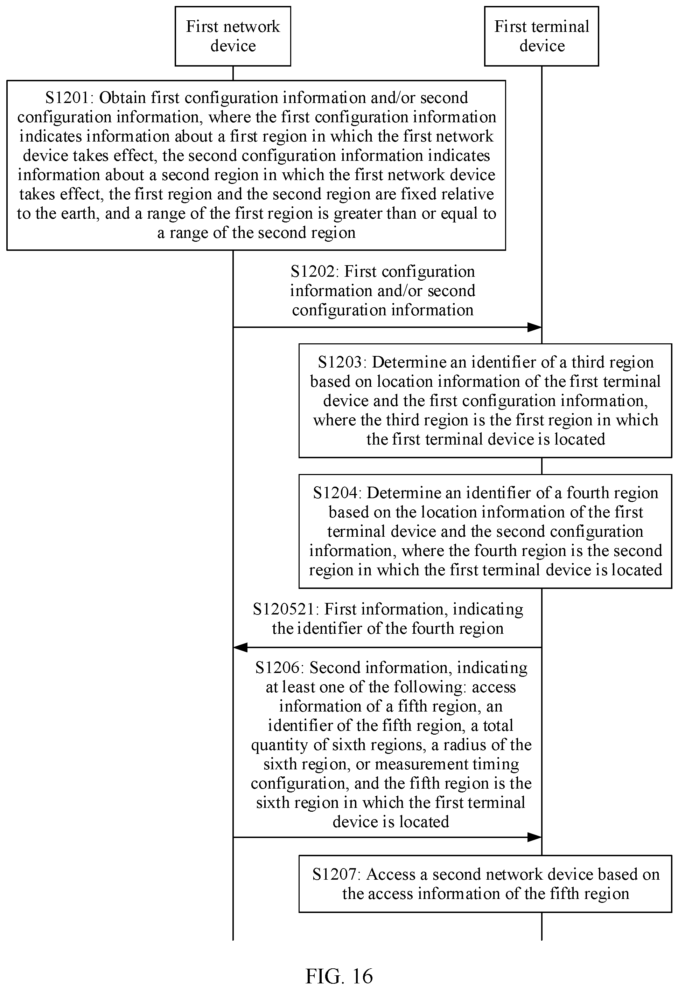

The foregoing manner 1 to manner 3 may be applied to a standalone (standalone, SA) networking scenario. In addition, the communication method provided in embodiments of this application may be further applied to a non-standalone (non-standalone, NSA) networking scenario. In the NSA networking scenario, as shown in FIG. 16, based on the foregoing manner 2 or manner 3, the first network device and the first terminal device may further perform steps S1206 and S1207 below.

S1206: The first network device sends second information to the first terminal device. Correspondingly, the first terminal device receives the second information from the first network device.

The second information indicates at least one of the following: access information of a fifth region, an identifier of the fifth region, a total quantity $N'_{spot\_b}$ of sixth regions, a radius $R'_{spot\_b}$ of the sixth region, or measurement timing configuration information.

The sixth region is fixed relative to the earth. The sixth region is a type of the foregoing region and satisfies all characteristics of the foregoing described region. For example, a geographical location of the sixth region is determined based on an identifier of the sixth region. Further, the geographical location of the sixth region is further determined based on at least one of the following: the radius of the sixth region, the earth radius, or the total quantity of sixth regions. Refer to the foregoing related description of the region. Details are not described herein again.

The total quantity of sixth regions is a total quantity of regions in which the second network device takes effect. The radius of the sixth region is a radius of a region in which the second network device takes effect. A type of the sixth region is the same as that of the first region. In other words, the sixth region may also be understood as a broadcast region or a broadcast beam position.

For example, the total quantity of sixth regions in which the second network device takes effect may be the same as or different from the total quantity of first regions in which the first network device takes effect. The radius of the sixth region in which the second network device takes effect may be the same as or different from the radius of the first region in which the first network device takes effect. This is not specifically limited in this application.

The fifth region is a sixth region in which the first terminal device is located. In other words, the fifth region is a sixth region in which the first terminal device is located in the $N'_{spot\_b}$ sixth regions.

For example, after receiving the first information and learning of the identifier of the fourth region, the first network device may determine the reference location (denoted as a location A) of the fourth region based on the identifier of the fourth region, determine, based on the radius of the sixth region and the total quantity of sixth regions, a sixth region including the location A, and determine the sixth region including the location A as the sixth region (that is, the fifth region) in which the first terminal device is located. In other words, the first network device may determine, based on the identifier of the fourth region, the sixth region in which the first terminal device is located.

In addition, before step S1206, the first terminal device may further measure signal quality (for example, signal quality of an SSB) of the second network device, and report the signal quality of the second network device to the first network device. The first network device may determine, based on the identifier of the fourth region and a signal of the second network device, the sixth region in which the first terminal device is located. For example, if signal quality of an SSB covering or serving the sixth region including the location A is greater than a preset threshold, the first network device determines, as the sixth region in which the first terminal device is located, the sixth region including the location A.

The access information of the fifth region is used by a terminal device (including the first terminal device) in the fifth region to access the second network device. For example, the access information may include at least one of an RO, a random access preamble, a TA, or a time period. Refer to related descriptions of the access information in step S120511. Details are not described herein again.

The measurement timing configuration information is used to configure a time at which a terminal device (including the first terminal device) in the fifth region measures a signal (for example, an SSB) of the second network device. For example, the measurement timing configuration information may be SSB measurement timing configuration (SSB measurement timing configuration, SMTC).

S1207: The first terminal device accesses the second network device based on the access information of the fifth region.

Optionally, before accessing the second network device, the first terminal device may measure an SSB of the second network device based on the measurement timing configuration information, and perform downlink synchronization with the second network device based on the SSB.

Optionally, for implementation of step S1207, refer to related descriptions of accessing the first network device by the first terminal device based on the access information corresponding to the third region in step S120512. Details are not described herein again.

Based on the foregoing solution, in the NSA networking scenario, the first network device can determine, based on the first region that is of the first network device and in which the first terminal device is located, a sixth region that is of the second network device and in which the first terminal device is located, to indicate, to the first terminal device, access information corresponding to the sixth region and the like, so that the first terminal device can access the second network device based on the access information. However, in a conventional NSA networking procedure, after accessing an eNodeB, a terminal device needs to perform NR measurement to discover an NR neighboring cell with highest signal quality, and send a measurement result to the eNodeB, so that the eNodeB adds a gNB to which the NR neighboring cell with the highest signal quality belongs. After the eNodeB adds the gNB, the terminal device performs random access to access an NR cell.

Compared with a conventional NSA networking procedure, the foregoing solution does not require the first terminal device to perform related measurement. After learning of the sixth region in which the first terminal device is located, the first network device may directly send the access information of the sixth region, so that the first terminal device accesses the second network device based on the access information. In other words, the first terminal device can access the second network device more quickly, thereby reducing access duration and improving access efficiency.

Manner 4: The first terminal device performing communication based on the identifier of the third region includes: the first terminal device performs communication based on the identifier of the third region in a time period in which the third region is served by the beam of the first network device.

The first terminal device performing communication based on the identifier of the fourth region includes: the first terminal device performs communication based on the identifier of the fourth region in a time period in which the fourth region is served by the beam of the first network device.

In a possible implementation, the first network device may indicate, to the first terminal device, the time period in which the third region and/or the fourth region are/is served by the beam of the first network device, so that the first terminal device performs communication within the time period based on the identifier of the third region and/or the identifier of the fourth region. For example, the first network device may perform indication in the following several manners:

Manner 1: The first network device sends third information to the first terminal device. Correspondingly, the first terminal device receives the third information from the first network device.

The third information indicates a first-region set and/or a second-region set. The first-region set includes the first region in the coverage region or the service region of the first network device. The second-region set includes the second region in the coverage region or the service region of the first network device. It may be understood that the first-region set includes the third region, and the second-region set includes the fourth region.

For example, the third information may have the following two implementation forms:

Form A: The third information includes an identifier of each first region in the first-region set, and/or an identifier of each second region in the second-region set.

For example, the coverage region or the service region of the first network device includes first regions whose identifiers are 1 to 100 and second regions whose identifiers are 1 to 150. The third information may include the identifiers {1,2, ...,100} and/or the identifiers {1,2, ..,150}.

Form B: The third information includes an identifier of a first reference region and a first threshold, and/or the third information includes an identifier of a second reference region and/or a second threshold.

In a first possible implementation, a distance between a reference location of each first region in the first-region set and a reference location in the first reference region is less than or equal to the first threshold. A distance between a reference location of each second region in the second-region set and a reference location in the second reference region is less than or equal to the second threshold.

Optionally, after receiving the third information, the first terminal device may determine the reference location in the first reference region based on the identifier (for example, 50) of the first reference region. Then, the first terminal device may traverse identifiers of first regions, calculate a reference location corresponding to each identifier, and determine, as the identifier of the first region in the first-region set, an identifier corresponding to a reference location at a distance less than or equal to the first threshold from the reference location in the first reference region. Implementation of determining the second-region set by the first terminal device is similar to implementation of determining the first-region set. Details are not described again.

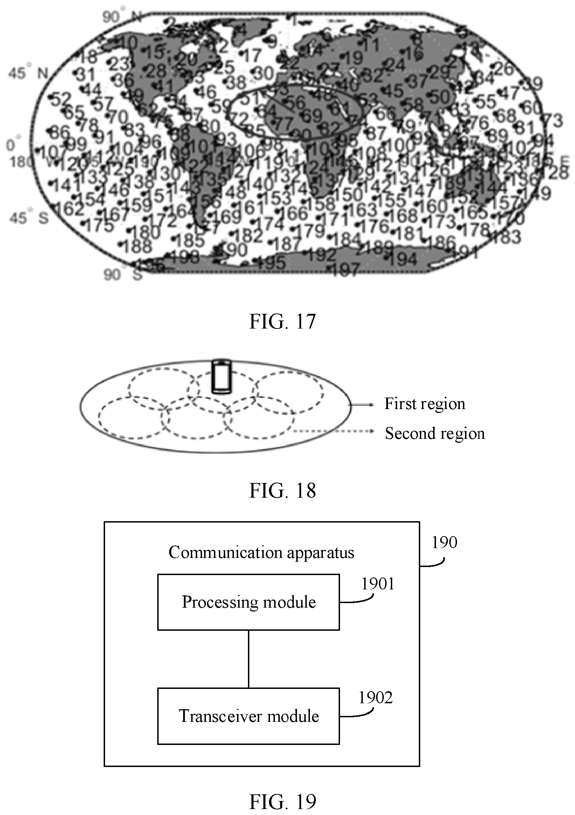

In a possible implementation scenario, the first possible implementation may also be changed to: the third information including the identifier of the first reference region and a quantity N of first regions in the first-region set. In this case, the first region in the first-region set includes the first reference region and N-1 first regions closest to the first reference region. For example, as shown in FIG. 17, the total quantity of first regions is equal to 197. The first region in the first-region set may be a first region in a solid-line ellipse. A manner of indicating the second-region set is similar. Details are not described again.

In a second possible implementation, a difference between an identifier of each first region in the first-region set and the identifier of the first reference region is less than or equal to the first threshold. A difference between an identifier of each second region in the second-region set and the identifier of the second reference region is less than or equal to the second threshold.

It may be understood that a value of the first threshold in the second possible implementation is different from that in a first possible implementation. For example, the first threshold is 200 km in the first possible implementation, and the first threshold is 50 in the second possible implementation. Similarly, values of the second threshold may be different in the two implementations.

Optionally, after receiving the third information, the first terminal device may traverse the identifiers of the first regions, calculate a difference between each identifier and the identifier of the first reference region, and determine, as the identifier of the first region in the first-region set, an identifier whose difference with the identifier of the first reference region is less than or equal to the first threshold. Implementation of determining the second-region set by the first terminal device is similar to implementation of determining the first-region set. Details are not described again.

For example, in the foregoing two possible implementations, the first terminal device may traverse region identifiers from 1 to $N_{spot}$, or from 0 to $N_{spot} - 1$. Alternatively, the first terminal device may traverse identifiers in a specific identifier range, for example, traverse region identifiers in a range $[a - C, a + C]$. $a$ represents an identifier of a reference region, and $2C$ may represent a maximum quantity of regions in a region set.

On the basis of sending the third information, the first network device further sends fourth information to the first terminal device. Correspondingly, the first terminal device receives the fourth information from the first network device.

The fourth information indicates a first region that is in the first-region set and that is served by a beam of the first network device, and/or indicates a second region that is in the second-region set and that is served by a beam of the first network device. For example, it indicates that the first region that is in the first-region set and that is served by the beam of the first network device is a first region 30 to a first region 50, and/or indicates that the second region that is in the second-region set and that is served by the beam of the first network device is a second region 25 to a second region 35.

For example, the fourth information may include a first bitmap and/or a second bitmap. The first bitmap includes N bits. The N bits are in a one-to-one correspondence with the N first regions in the first-region set, where N is the total quantity of first regions in the first-region set. When a specific bit in the first bitmap is set to a preset value (for example, "1" or "0"), it indicates that a first region corresponding to the bit is served by a beam of the first network device. The second bitmap corresponds to the second-region set. For implementation of the second bitmap, refer to related descriptions of the first bitmap. Details are not described herein again.

Manner 2: The first network device sends seventh information to the first terminal device. Correspondingly, the first terminal device receives the seventh information from the first network device.

The seventh information includes an identifier of a first region served by a beam of the first network device, and/or an identifier of a second region served by a beam of the first network device. It may be understood that the manner 2 does not depend on the third information.

Optionally, in the manner 1 and the manner 2, the first network device may indicate an identifier of a first region served by a beam of the first network device at a current moment, and/or an identifier of a second region served by a beam of the first network device at a current moment. A start moment of a time period in which the beam of the first network device serves the first region and/or the second region may be a current moment, and an end moment may be a moment at which updated fourth information or seventh information is received next time.

The updated fourth information or the seventh information indicates an identifier of a first region latest served by a beam of the first network device and/or an identifier of a second region latest served by a beam of the first network device.

Manner 3: The first network device sends fifth information to the first terminal device. Correspondingly, the first terminal device receives the fifth information from the first network device.

The fifth information indicates N third time periods and N first-region subsets, and/or indicates M fourth time periods and M second-region subsets.

An $n^{th}$ first-region subset includes the first region that is in the first-region set and that is served by the beam of the first network device in an $n^{th}$ third time period. Herein, N is a positive integer, and $n = 1, 2, ... , N$. In other words, the first network device indicates, to the first terminal device, a time period in which the beam of the first network device serves each first region.

An m<sup>th</sup> second-region subset includes the second region that is in the second-region set and that is served by the beam of the first network device in an m<sup>th</sup> fourth time period. Herein, M is a positive integer, and $m = 1,2, ... , M$. In other words, the first network device indicates, to the first terminal device, a time period in which the beam of the first network device serves each second region.

Manner 4: The first network device sends an entrance elevation angle and a departure elevation angle to the first terminal device. Correspondingly, the first terminal device receives the entrance elevation angle and the departure elevation angle from the first network device.

The entrance elevation angle may be used to determine whether the beam of the first network device starts to serve the first region or the second region. The departure elevation angle may be used to determine whether the beam of the first network device has ended serving the first region or the second region.

For example, the first terminal device may determine, based on the entrance elevation angle and the departure elevation angle, the first region and/or the second region served by the beam of the first network device at the current moment. If the first region served by the beam of the first network device includes the third region, the first terminal device performs communication at the current moment based on the identifier of the third region; or if the second region served by the beam of the first network device includes the fourth region, the first terminal device performs communication at the current moment based on the identifier of the fourth region.

In the manner 4, for specific implementation of performing communication by the first terminal device based on the identifier of the third region and/or the identifier of the fourth region, refer to related descriptions in the manner 1 to the manner 3. Details are not described herein again.

Based on the foregoing manner 4, the first network device can indicate, to the first terminal device, the first region and/or the second region served by the beam of the first network device, so that the first terminal device can perform communication within a beam service time, thereby improving communication performance. In addition, the first region and/or the second region served by the beam of the first network device may be indicated by using an identifier or a bitmap of a region. Signaling overheads can be reduced in this manner compared with explicitly describing a geographical region served by a beam of the first network device, for example, describing by using information such as latitude and longitude.

In some possible implementation scenarios, the first network device may further send sixth information to the first terminal device. Correspondingly, the first terminal device receives the sixth information from the first network device.

The sixth information indicates a first quasi co-location (quasi co-location, QCL) relationship. A receive beam of the first region and a receive beam of the second region included in the first region satisfy the first QCL relationship. For example, the first QCL relationship may be a QCL type D (QCL type D). Certainly, the first QCL relationship may alternatively be another QCL type, for example, a QCL type C.

For example, as shown in FIG. 18, one first region includes six second regions, and a receive beam of the first region and receive beams of the six second regions satisfy the first QCL relationship.

Optionally, the sixth information further indicates a fifth time period or a timer. The receive beam of the first region and the receive beam of the second region in the first region satisfy the first QCL relationship in the fifth time period; or the receive beam of the first region and the receive beam of the second region in the first region satisfy the first QCL relationship before the timer expires.

In this scenario, the first terminal device performing communication based on the identifier of the third region includes: the first terminal device determines, based on the identifier of the third region, at least one second region included in the third region, and performs communication by using a first beam corresponding to the third region and a second beam corresponding to the at least one second region. The first beam and the second beam satisfy the first QCL relationship.

Based on this solution, the first terminal device may determine, based on a beam of the first region, a beam of the second region in the first region; or determine, based on a beam of the second region, a beam of the first region to which the second region belongs. This can avoid a frequent beam pairing process, reduce a beam matching delay, and improve beam management efficiency. In addition, because a beam matching delay is reduced, a communication delay can be reduced, and communication efficiency can be improved.

It can be understood that, in the foregoing embodiments, the methods and/or steps implemented by the terminal device may be alternatively implemented by a component (for example, a processor, a chip, a chip system, a circuit, a logical module, or software) that may be used in the terminal device, and the methods and/or steps implemented by the network device may be alternatively implemented by a component (for example, a processor, a chip, a chip system, a circuit, a logical module, or software) that may be used in the network device. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For a communication apparatus, FIG. 19 is a diagram of a structure of a communication apparatus 190. The communication apparatus 190 includes a processing module 1901 and a transceiver module 1902. The communication apparatus 190 may be configured to implement functions of the terminal device or the network device.

In some embodiments, the communication apparatus 190 may further include a storage module (not shown in FIG. 19), configured to store program instructions and data.

In some embodiments, the transceiver module 1902 may also be referred to as a transceiver unit, configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module that are respectively configured to perform the receiving and sending steps performed by the network device in the foregoing method embodiments, and/or configured to support another process of the technology described in this specification. The processing module 1901 may be configured to perform the processing (for example, determining) steps performed by the network device in the foregoing method embodiments, and/or configured to support another process of the technology described in this specification.

For example, the communication apparatus 190 is configured to implement functions of the terminal device.

The transceiver module 1902 is configured to receive first configuration information and second configuration information from a first network device. The first configuration information indicates information about a first region in which the first network device takes effect. The second configuration information indicates information about a second region in which the first network device takes effect. The first region and the second region are fixed relative to the earth. A range of the first region is greater than or equal to a range of the second region. The processing module 1901 is configured to determine an identifier of a third region based on location information of a first terminal device and the first configuration information. The third region is the first region in which the first terminal device is located. The processing module 1901 is further configured to determine an identifier of a fourth region based on the location information of the first terminal device and the second configuration information. The fourth region is the second region in which the first terminal device is located. The processing module 1901 is further configured to perform communication based on the identifier of the third region or the identifier of the fourth region.

In a possible implementation, that the processing module 1901 is configured to perform communication based on the identifier of the third region includes: the processing module 1901 is configured to determine, based on the identifier of the third region, access information corresponding to the third region; and the processing module 1901 is further configured to access the first network device based on the access information corresponding to the third region.

In a possible implementation, that the processing module 1901 is configured to perform communication based on the identifier of the fourth region includes: the processing module 1901 is configured to send first information to the first network device through the transceiver module 1902, where the first information indicates the identifier of the fourth region.

In a possible implementation, that the processing module 1901 is configured to perform communication based on the identifier of the fourth region includes: the processing module 1901 is configured to determine, based on the identifier of the fourth region, a communication resource corresponding to the fourth region; and the processing module 1901 is further configured to send first information to the first network device through the transceiver module 1902 by using the communication resource corresponding to the fourth region, where the first information indicates the identifier of the fourth region.

In a possible design, the transceiver module 1902 is further configured to receive second information from the first network device, where the second information indicates at least one of the following: access information of a fifth region, an identifier of the fifth region, a total quantity of sixth regions, a radius of the sixth region, or measurement timing configuration information; and the fifth region is the sixth region in which the first terminal device is located. The sixth region is fixed relative to the earth. A geographical location of the sixth region is determined based on an identifier of the sixth region. The total quantity of sixth regions is a total quantity of regions in which the second network device takes effect. The access information of the fifth region is used by the first terminal device to access the second network device. The measurement timing configuration information is used to configure a time for measuring a signal of the second network device by the first terminal device.

In a possible implementation, the processing module 1901 is further configured to access the second network device based on the access information corresponding to the fifth region.

In a possible design, the transceiver module 1902 is further configured to receive third information from the first network device, where the third information indicates a first-region set and/or a second-region set, the first-region set includes the first region in a coverage region of the first network device, and the second-region set includes the second region in the coverage region of the first network device.

In a possible design, the transceiver module 1902 is further configured to receive fourth information from the first network device, where the fourth information indicates a first region that is in the first-region set and that is served by a beam of the first network device, and/or indicates a second region that is in the second-region set and that is served by a beam of the first network.

In a possible design, the transceiver module 1902 is further configured to receive fifth information from the first network device, where the fifth information indicates N third time periods and N first-region subsets, and/or indicates M fourth time periods and M second-region subsets. An $n^{th}$ first-region subset includes the first region that is in the first-region set and that is served by the beam of the first network device in an $n^{th}$ third time period. Herein, N is a positive integer, and n=1, 2, ..., N. An $m^{th}$ second-region subset includes the second region that is in the second-region set and that is served by the beam of the first network device in an $m^{th}$ fourth time period. Herein, M is a positive integer, and m=1, 2, ..., M.

In a possible design, that the processing module 1901 is configured to perform communication based on the identifier of the third region or the identifier of the fourth region includes: the processing module 1901 is configured to perform communication based on the identifier of the third region in a time period in which the third region is served by a beam of the first network device; or the processing module 1901 is configured to perform communication based on the identifier of the fourth region in a time period in which the fourth region is served by a beam of the first network device.

In a possible design, the transceiver module 1902 is further configured to: receive sixth information from the first network device, where the sixth information indicates a first quasi co-location QCL relationship, and a receive beam of the first region and a receive beam of the second region in the first region satisfy the first QCL relationship.

The communication apparatus 190 is configured to implement functions of the network device.

In this case, the processing module 1901 is configured to obtain first configuration information and second configuration information. The first configuration information indicates information about a first region in which the first network device takes effect. The second configuration information indicates information about a second region in which the first network device takes effect. The first region and the second region are fixed relative to the earth. A range of the first region is greater than or equal to a range of the second region. The transceiver module 1902 is configured to send the first configuration information and the second configuration information to a terminal device.

In a possible design, the transceiver module 1902 is further configured to send second information to a terminal device, where the second information indicates at least one of the following: access information of a fifth region, an identifier of the fifth region, a total quantity of sixth regions, a radius of the sixth region, or measurement timing configuration information; and the fifth region is the sixth region in which the first terminal device is located. The sixth region is fixed relative to the earth. A geographical location of the sixth region is determined based on an identifier of the sixth region. The total quantity of sixth regions is a total quantity of regions in which the second network device takes effect. The access information of the fifth region is used by the first terminal device to access the second network device. The measurement timing configuration information is used to configure a time for measuring a signal of the second network device by the first terminal device.

In a possible design, the transceiver module 1902 is further configured to send third information to the terminal device, where the third information indicates a first-region set and/or a second-region set, the first-region set includes the first region in a coverage region of the first network device, and the second-region set includes the second region in the coverage region of the first network device.

In a possible design, the transceiver module 1902 is further configured to send fourth information to the terminal device, where the fourth information indicates a first region that is in the first-region set and that is served by a beam of the first network device, and/or indicates a second region that is in the second-region set and that is served by a beam of the first network.

In a possible design, the transceiver module 1902 is further configured to send fifth information to the terminal device, where the fifth information indicates N third time periods and N first-region subsets, and/or indicates M fourth time periods and M second-region subsets. An $n^{th}$ first-region subset includes the first region that is in the first-region set and that is served by the beam of the first network device in an $n^{th}$ third time period. Herein, N is a positive integer, and n=1, 2, ..., N. An $m^{th}$ second-region subset includes the second region that is in the second-region set and that is served by the beam of the first network device in an $m^{th}$ fourth time period. Herein, M is a positive integer, and m=1, 2, ..., M.

In a possible design, the transceiver module 1902 is further configured to: send sixth information to the terminal device, where the sixth information indicates a first quasi co-location QCL relationship, and a receive beam of the first region and a receive beam of the second region in the first region satisfy the first QCL relationship.

All related content of the steps in the foregoing method embodiments may be cited in function descriptions of the corresponding functional modules. Details are not described herein again.

In this application, the communication apparatus 190 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 190 in FIG. 19 is a chip or a chip system, a function/an implementation process of the transceiver module 1902 may be implemented by using an input/output interface (or a communication interface) of the chip or the chip system, and a function/an implementation process of the processing module 1901 may be implemented by using a processor (or a processing circuit) of the chip or the chip system.

The communication apparatus 190 provided in this embodiment may perform the foregoing methods. Therefore, for technical effect that can be achieved by the communication apparatus 190, refer to the foregoing method embodiments. Details are not described herein again.

In a possible product form, the terminal device or the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

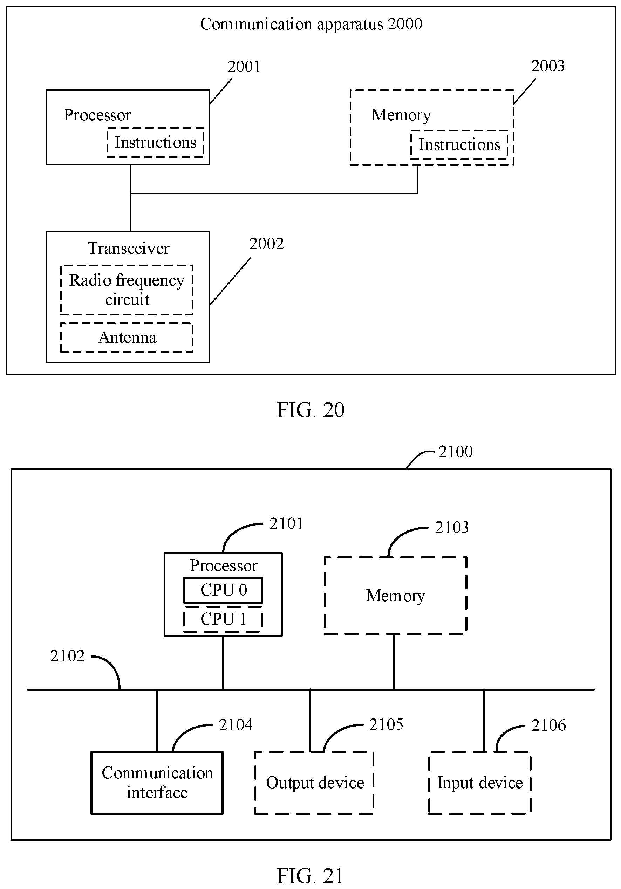

In another possible product form, the terminal device or the network device in embodiments of this application may be implemented by using a general bus architecture. For ease of description, refer to FIG. 20. FIG. 20 is a diagram of a structure of a communication apparatus 2000 according to an embodiment of this application. The communication apparatus 2000 includes a processor 2001 and a transceiver 2002. The communication apparatus 2000 may be a terminal device, or a chip or a chip system in a terminal device. Alternatively, the communication apparatus 2000 may be a network device, or a chip or a module in a network device. FIG. 20 shows only main components of the communication apparatus 2000. In addition to the processor 2001 and the transceiver 2002, the communication apparatus may further include a memory 2003 and an input/output apparatus (which is not shown in the figure).

Optionally, the processor 2001 is mainly configured to: process a communication protocol and communication data, control the entire communication apparatus, execute a software program, and process data of the software program. The memory 2003 is mainly configured to store the software program and the data. The transceiver 2002 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 2001, the transceiver 2002, and the memory 2003 may be connected through a communication bus.

After the communication apparatus is powered on, the processor 2001 may read the software program in the memory 2003, interpret and execute instructions of the software program, and process data of the software program. When data needs to be sent in a wireless manner, the processor 2001 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 2001. The processor 2001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 190 may be in a form of the communication apparatus 2000 shown in FIG. 20.

In an example, functions/implementation processes of the processing module 1901 in FIG. 19 may be implemented by the processor 2001 in the communication apparatus 2000 shown in FIG. 20 by invoking computer-executable instructions stored in the memory 2003. Functions/implementation processes of the transceiver module 1902 in FIG. 19 may be implemented by the transceiver 2002 in the communication apparatus 2000 shown in FIG. 20.

In still another possible product form, the terminal device or the network device in this application may use a composition structure shown in FIG. 21, or include components shown in FIG. 21. FIG. 21 is a composition diagram of a communication apparatus 2100 according to this application. The communication apparatus 2100 may be a network device, or a module, a chip, or a system on a chip in a network device. Alternatively, the communication apparatus 2100 may be a terminal device, or a module, a chip, or a system on a chip in a terminal device.

As shown in FIG. 21, the communication apparatus 2100 includes at least one processor 2101 and at least one communication interface (FIG. 21 is described merely by using an example in which one communication interface 2104 and one processor 2101 are included). Optionally, the communication apparatus 2100 may further include a communication bus 2102 and a memory 2103.

The processor 2101 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 2101 may be another apparatus having a processing function, for example, a circuit, a component, or a software module. This is not limited.

The communication bus 2102 is configured to connect different components in the communication apparatus 2100, so that the different components can communicate with each other. The communication bus 2102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 21, but this does not indicate that there is only one bus or only one type of bus.

The communication interface 2104 is configured to communicate with another device or a communication network. For example, the communication interface 2104 may be a module, a circuit, a transceiver, or any apparatus that can implement communication. Optionally, the communication interface 2104 may alternatively be an input/output interface located in the processor 2101, and is configured to implement signal input and signal output of the processor.

The memory 2103 may be an apparatus having a storage function, and is configured to store instructions and/or data. The instructions may be computer programs.

For example, the memory 2103 may be a read-only memory (read-only memory, ROM) or another type of static storage device that may store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or the like. This is not limited.

It should be noted that the memory 2103 may be independent of the processor 2101, or may be integrated with the processor 2101. The memory 2103 may be located inside the communication apparatus 2100, or may be located outside the communication apparatus 2100. This is not limited. The processor 2101 may be configured to execute the instructions stored in the memory 2103, to implement a method provided in the following embodiments of this application.

In an optional implementation, the communication apparatus 2100 may further include an output device 2105 and an input device 2106. The output device 2105 communicates with the processor 2101, and may display information in a plurality of manners. For example, the output device 2105 may be a liquid crystal display (liquid crystal display, LCD), a light emitting diode (light emitting diode, LED) display device, a cathode ray tube (cathode ray tube, CRT) display device, or a projector (projector). The input device 2106 communicates with the processor 2101, and may receive an input from a user in a plurality of manners. For example, the input device 2106 may be a mouse, a keyboard, a touchscreen device, or a sensor device.

In some embodiments, in hardware implementation, a person skilled in the art may figure out that the communication apparatus 190 shown in FIG. 19 may be in a form of the communication apparatus 2100 shown in FIG. 21.

In an example, functions/implementation processes of the processing module 1901 in FIG. 19 may be implemented by the processor 2101 in the communication apparatus 2100 shown in FIG. 21 by invoking computer-executable instructions stored in the memory 2103. Functions/implementation processes of the transceiver module 1902 in FIG. 19 may be implemented by the communication interface 2104 in the communication apparatus 2100 shown in FIG. 21.

It should be noted that the structure shown in FIG. 21 does not constitute specific limitation on the network device. For example, in some other embodiments of this application, the network device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This

**EP 4 769 992 A1**

application is intended to cover these modifications and variations of this application provided that they fall within the scope of protection defined by the following claims and their equivalent technologies.

**Claims**

1. A communication method, wherein the method comprises:

    receiving first configuration information and second configuration information from a first network device, wherein the first configuration information indicates information about a first region in which the first network device takes effect, the second configuration information indicates information about a second region in which the first network device takes effect, the first region and the second region are fixed relative to the earth, and a range of the first region is greater than or equal to a range of the second region;
    determining an identifier of a third region based on location information of a first terminal device and the first configuration information, wherein the third region is the first region in which the first terminal device is located;
    determining an identifier of a fourth region based on the location information of the first terminal device and the second configuration information, wherein the fourth region is the second region in which the first terminal device is located; and
    performing communication based on the identifier of the third region or the identifier of the fourth region.

2. The method according to claim 1, wherein a geographical location of the first region is determined based on an identifier of the first region, and a geographical location of the second region is determined based on an identifier of the second region.

3. The method according to claim 2, wherein the geographical location of the first region is further determined based on at least one of the following: a radius of the first region, an earth radius, and a total quantity of first regions; and/or the geographical location of the second region is further determined based on at least one of the following: a radius of the second region, the earth radius, and a total quantity of second regions.

4. The method according to claim 3, wherein the first region comprises a reference location, and three-dimensional coordinates of the reference location and the identifier of the first region satisfy the following relationship:

$$RL(i) = R_e \times (\cos \varphi_i \sin \theta_i, \sin \varphi_i \sin \theta_i, \cos \theta_i),$$

$$\varphi_i = 2\pi \left[ \frac{2i}{1+\sqrt{5}} \right],$$

and

$$\theta_i = \cos^{-1} \left( 1 - \frac{2i+1}{N_{spot\_b}} \right), i \in \{0, \cdots, N_{spot\_b} - 1\},$$

wherein
$i$ represents the identifier of the first region, $RL(i)$ represents the three-dimensional coordinates of the reference location, $R_e$ represents the earth radius, $[x]$ represents a fractional part of $x$, and $N_{spot\_b}$ represents the total quantity of first regions.

5. The method according to claim 4, wherein a projection $RL(x_i, y_i)$ of the reference location on a unit square and the identifier of the first region satisfy the following relationship:

$$RL(x_i) = (1 - cos\theta_i)/2,$$

and

$$RL(y_i) = \varphi_i (2\pi)^{-1},$$

34

wherein

the unit square is a square whose vertexes are located at (0, 0), (1, 0), (0, 1), and (1, 1) on a Cartesian plane, $RL(x_i)$ represents a projection metric of the reference location on an *x*-axis of the unit square, and $RL(x_i)$ represents a projection metric of the reference location on a *y*-axis of the unit square.

6. The method according to claim 4 or 5, wherein Cartesian coordinates $RL(x_i, y_i)$ of the reference location and the identifier of the first region satisfy the following relationship:

$$RL(x_i) = i/N_{spot\_b},$$

and

$$RL(y_i) = \left[\frac{i}{\emptyset}\right], \emptyset = \frac{1+\sqrt{5}}{2},$$

wherein

$RL(x_i)$ represents a projection metric of the reference location in an *x*-axis direction of the Cartesian coordinate system, and $RL(y_i)$ represents a projection metric of the reference location in a *y*-axis direction of the Cartesian coordinate system.

7. The method according to claim 3, wherein the first region comprises a reference location, and three-dimensional coordinates of the reference location and the identifier of the first region satisfy the following relationship:

$$RL(i) = R_e \times \left(\sqrt{1 - z_i^2} \cos 2\pi i\,\emptyset, \sqrt{1 - z_i^2} \sin 2\pi i\,\emptyset, z_i\right),$$

$$z_i = \frac{2i-1}{N_{spot\_b}} - 1, i \in \{1, \cdots, N_{spot\_b}\},$$

and

$$\emptyset = \frac{1+\sqrt{5}}{2},$$

wherein

i represents the identifier of the first region, $RL(i)$ represents the three-dimensional coordinates of the reference location, $R_e$ represents the earth radius, and $N_{spot}$ represents the total quantity of first regions.

8. The method according to claim 3, wherein the first region comprises a reference location, and longitude and latitude coordinates of the reference location and the identifier of the first region satisfy the following relationship:

$$RL(i) = (\text{lon}(i), \text{lat}(i)),$$

$$\text{lon}(i) = \sin^{-1}\left(\frac{2i}{2N+1}\right), N = \frac{N_{spot\_b}-1}{2},$$

and

$$\text{lat}(i) = 2\pi i\emptyset^{-1}, i \in \{1, \cdots, N_{spot\_b}\}, \emptyset = \frac{1+\sqrt{5}}{2},$$

wherein

lon(*i*) represents longitude of the reference location, lat(*i*) represents latitude of the reference location, and $N_{spot\_b}$ represents the total quantity of first regions.

9. The method according to any one of claims 3 to 8, wherein the radius of the first region and the total quantity of first regions satisfy the following relationship:

$$N_{spot\_b} = \frac{8\pi R_e^2}{3\sqrt{3}R_{spot\_b}^2},$$

wherein $R_e$ represents the earth radius, $N_{spot\_b}$ represents the total quantity of first regions, and $R_{spot\_b}$ represents the radius of the first region.

10. The method according to any one of claims 1 to 9, wherein the information about the first region comprises the total quantity $N_{spot\_b}$ of first regions and/or the radius $R_{spot\_b}$ of the first region; and/or
the information about the second region comprises the total quantity $N_{spot\_s}$ of second regions and/or the radius $R_{spot\_s}$ of the second region.

11. The method according to claim 10, wherein the information about the first region further comprises access information corresponding to the first region, and the access information is used by a terminal device in the first region to access the first network device.

12. The method according to claim 11, wherein the access information comprises at least one of the following: a random access occasion RO, a random access preamble, a timing advance TA, or a first time period, and the first time period is a time period in which a beam of the first network device serves the first region.

13. The method according to claim 11 or 12, wherein performing communication based on the identifier of the third region comprises:

determining, based on the identifier of the third region, access information corresponding to the third region; and accessing the first network device based on the access information corresponding to the third region.

14. The method according to claim 10, wherein performing communication based on the identifier of the fourth region comprises: sending first information to the first network device, wherein the first information indicates the identifier of the fourth region.

15. The method according to claim 10, wherein the information about the second region further comprises a communication resource corresponding to the second region, and the communication resource is used for information transmission between a terminal device in the second region and the first network device.

16. The method according to claim 15, wherein the communication resource comprises at least one of the following: a frequency domain resource, a polarization manner, or a second time period, and the second time period is a time period in which a beam of the first network device serves the second region.

17. The method according to claim 15 or 16, wherein performing communication based on the identifier of the fourth region comprises:

determining, based on the identifier of the fourth region, a communication resource corresponding to the fourth region; and
sending first information to the first network device by using the communication resource corresponding to the fourth region, wherein the first information indicates the identifier of the fourth region.

18. The method according to any one of claims 14 to 17, wherein the method further comprises:

receiving second information from the first network device, wherein the second information indicates at least one of the following: access information of a fifth region, an identifier of the fifth region, a total quantity of sixth regions, a radius of the sixth region, or measurement timing configuration information; and the fifth region is the sixth region in which the first terminal device is located; and
the sixth region is fixed relative to the earth, a geographical location of the sixth region is determined based on an identifier of the sixth region, the total quantity of sixth regions is a total quantity of regions in which the second network device takes effect, the access information of the fifth region is used by the first terminal device to access the second network device, and the measurement timing configuration information is used to configure a time for measuring a signal of the second network device by the first terminal device.

19. The method according to claim 18, wherein the method further comprises: accessing the second network device based on the access information corresponding to the fifth region.

20. The method according to any one of claims 1 to 19, wherein the method further comprises:
receiving third information from the first network device, wherein the third information indicates a first-region set and/or a second-region set, the first-region set comprises the first region in a coverage region of the first network device, and the second-region set comprises the second region in the coverage region of the first network device.

21. The method according to claim 20, wherein the method further comprises:
receiving fourth information from the first network device, wherein the fourth information indicates a first region that is in the first-region set and that is served by a beam of the first network device, and/or indicates a second region that is in the second-region set and that is served by a beam of the first network.

22. The method according to claim 20, wherein the method further comprises:

receiving fifth information from the first network device, wherein the fifth information indicates N third time periods and N first-region subsets, and/or indicates M fourth time periods and M second-region subsets;
an $n^{th}$ first-region subset comprises the first region that is in the first-region set and that is served by the beam of the first network device in an $n^{th}$ third time period, N is a positive integer, and $n = 1, 2, ... , N$; and
an $m^{th}$ second-region subset comprises the second region that is in the second-region set and that is served by the beam of the first network device in an $m^{th}$ fourth time period, M is a positive integer, and $m = 1, 2, ... , M$.

23. The method according to claim 21 or 22, wherein performing communication based on the identifier of the third region or the identifier of the fourth region comprises:

performing communication based on the identifier of the third region in a time period in which the third region is served by a beam of the first network device; or
performing communication based on the identifier of the fourth region in a time period in which the fourth region is served by a beam of the first network device.

24. The method according to any one of claims 1 to 23, wherein the method further comprises:
receiving sixth information from the first network device, wherein the sixth information indicates a first quasi co-location QCL relationship, and a receive beam of the first region and a receive beam of the second region in the first region satisfy the first QCL relationship.

25. The method according to claim 24, wherein the sixth information further indicates a fifth time period or a timer; and

the receive beam of the first region and the receive beam of the second region in the first region satisfy the first QCL relationship in the fifth time period; or
the receive beam of the first region and the receive beam of the second region in the first region satisfy the first QCL relationship before the timer expires.

26. A communication method, wherein the method comprises:

obtaining first configuration information and second configuration information, wherein the first configuration information indicates information about a first region in which a first network device takes effect, the second configuration information indicates information about a second region in which the first network device takes effect, the first region and the second region are fixed relative to the earth, and a range of the first region is greater than or equal to a range of the second region; and
sending the first configuration information and the second configuration information to a terminal device.

27. The method according to claim 26, wherein a geographical location of the first region is determined based on an identifier of the first region, and a geographical location of the second region is determined based on an identifier of the second region.

28. The method according to claim 27, wherein the geographical location of the first region is further determined based on at least one of the following: a radius of the first region, an earth radius, and a total quantity of first regions; and/or the geographical location of the second region is further determined based on at least one of the following: a radius of the second region, the earth radius, and a total quantity of second regions.

29. The method according to claim 28, wherein the first region comprises a reference location, and three-dimensional coordinates of the reference location and the identifier of the first region satisfy the following relationship:

$$RL(i) = R_e \times (\cos \varphi_i \sin \theta_i , \sin \varphi_i \sin \theta_i , \cos \theta_i),$$

$$\varphi_i = 2\pi \left[ \frac{2i}{1+\sqrt{5}} \right],$$

and

$$\theta_i = \cos^{-1} \left( 1 - \frac{2i+1}{N_{spot\_b}} \right), i \in \{0, \cdots, N_{spot\_b} - 1\},$$

wherein
$i$ represents the identifier of the first region, $RL(i)$ represents the three-dimensional coordinates of the reference location, $R_e$ represents the earth radius, $[x]$ represents a fractional part of $x$, and $N_{spot\_b}$ represents the total quantity of first regions.

30. The method according to claim 29, wherein a projection $RL(x_i, y_i)$ of the reference location on a unit square and the identifier of the first region satisfy the following relationship:

$$RL(x_i) = (1 - cos\theta_i)/2,$$

and

$$RL(y_i) = \varphi_i (2\pi)^{-1},$$

wherein
the unit square is a square whose vertexes are located at (0, 0), (1, 0), (0, 1), and (1, 1) on a Cartesian plane, $RL(x_i)$ represents a projection metric of the reference location on an $x$-axis of the unit square, and $RL(y_i)$ represents a projection metric of the reference location on a $y$-axis of the unit square.

31. The method according to claim 29 or 30, wherein Cartesian coordinates $RL(x_i, y_i)$ of the reference location and the identifier of the first region satisfy the following relationship:

$$RL(x_i) = i/N_{spot\_b},$$

and

$$RL(y_i) = \left[ \frac{i}{\emptyset} \right], \emptyset = \frac{1+\sqrt{5}}{2},$$

wherein
$RL(x_i)$ represents a projection metric of the reference location in an $x$-axis direction of the Cartesian coordinate system, and $RL(y_i)$ represents a projection metric of the reference location in a $y$-axis direction of the Cartesian coordinate system.

32. The method according to claim 28, wherein the first region comprises a reference location, and three-dimensional coordinates of the reference location and the identifier of the first region satisfy the following relationship:

$$RL(i) = R_e \times (\sqrt{1 - z_i^2} \cos 2\pi i \, \emptyset, \sqrt{1 - z_i^2} \sin 2\pi i \, \emptyset, z_i),$$

$$z_i = \frac{2i-1}{N_{spot\_b}} - 1, i \in \{1, \cdots, N_{spot\_b}\},$$

and

$$\emptyset = \frac{1+\sqrt{5}}{2},$$

wherein
$i$ represents the identifier of the first region, $RL(i)$ represents the three-dimensional coordinates of the reference location, $R_e$ represents the earth radius, and $N_{spot}$ represents the total quantity of first regions.

33. The method according to claim 28, wherein the first region comprises a reference location, and longitude and latitude coordinates of the reference location and the identifier of the first region satisfy the following relationship:

$$RL(i) = (\mathrm{lon}(i), \mathrm{lat}(i)),$$

$$\mathrm{lon}(i) = \sin^{-1}(\frac{2i}{2N+1}), N = \frac{N_{spot\_b}-1}{2},$$

and

$$\mathrm{lat}(i) = 2\pi i \emptyset^{-1}, i \in \{1, \cdots, N_{spot\_b}\}, \emptyset = \frac{1+\sqrt{5}}{2},$$

wherein
$\mathrm{lon}(i)$ represents longitude of the reference location, $\mathrm{lat}(i)$ represents latitude of the reference location, and $N_{spot\_b}$ represents the total quantity of first regions.

34. The method according to any one of claims 28 to 33, wherein the radius of the first region and the total quantity of first regions satisfy the following relationship:

$$N_{spot\_b} = \frac{8\pi R_e^2}{3\sqrt{3}R_{spot\_b}^2},$$

wherein
$R_e$ represents the earth radius, $N_{spotb}$ represents the total quantity of first regions, and $R_{spot\_b}$ represents the radius of the first region.

35. The method according to any one of claims 26 to 34, wherein the information about the first region comprises the total quantity $N_{spot\_b}$ of first regions and/or the radius $R_{spot\_b}$ of the first region; and/or
the information about the second region comprises the total quantity $N_{spots}$ of second regions and/or the radius $R_{spot\_s}$ of the second region.

36. The method according to claim 35, wherein the information about the first region further comprises access information corresponding to the first region, and the access information is used by a terminal device in the first region to access the first network device.

37. The method according to claim 36, wherein the access information comprises at least one of the following: a random access occasion RO, a random access preamble, a timing advance TA, or a first time period, and the first time period is a time period in which a beam of the first network device serves the first region.

38. The method according to claim 35, wherein the information about the second region further comprises a communication resource corresponding to the second region, and the communication resource is used for information transmission between a terminal device in the second region and the first network device.

39. The method according to claim 38, wherein the communication resource comprises at least one of the following: a frequency domain resource, a polarization manner, or a second time period, and the second time period is a time period in which a beam of the first network device serves the second region.

40. The method according to claim 38 or 39, wherein the method further comprises:

sending second information to the terminal device, wherein the second information indicates at least one of the following: access information of a fifth region, an identifier of the fifth region, a total quantity of sixth regions, a radius of the sixth region, or measurement timing configuration information; and the fifth region is the sixth region in which the first terminal device is located; and

the sixth region is fixed relative to the earth, a geographical location of the sixth region is determined based on an identifier of the sixth region, the total quantity of sixth regions is a total quantity of regions in which the second network device takes effect, the access information of the fifth region is used by the first terminal device to access the second network device, and the measurement timing configuration information is used to configure a time for measuring a signal of the second network device by the first terminal device.

41. The method according to any one of claims 26 to 40, wherein the method further comprises:
sending third information to the terminal device, wherein the third information indicates a first-region set and/or a second-region set, the first-region set comprises the first region in a coverage region of the first network device, and the second-region set comprises the second region in the coverage region of the first network device.

42. The method according to claim 41, wherein the method further comprises:
sending fourth information to the terminal device, wherein the fourth information indicates a first region that is in the first-region set and that is served by a beam of the first network device, and/or indicates a second region that is in the second-region set and that is served by a beam of the first network.

43. The method according to claim 41, wherein the method further comprises:

sending fifth information to the terminal device, wherein the fifth information indicates N third time periods and N first-region subsets, and/or indicates M fourth time periods and M second-region subsets;
an $n^{th}$ first-region subset comprises the first region that is in the first-region set and that is served by the beam of the first network device in an $n^{th}$ third time period, N is a positive integer, and $n = 1, 2, ... , N$; and
an $m^{th}$ second-region subset comprises the second region that is in the second-region set and that is served by the beam of the first network device in an $m^{th}$ fourth time period, M is a positive integer, and $m = 1, 2, ... , M$.

44. The method according to any one of claims 26 to 43, wherein the method further comprises:
sending sixth information to the terminal device, wherein the sixth information indicates a first quasi co-location QCL relationship, and a receive beam of the first region and a receive beam of the second region in the first region satisfy the first QCL relationship.

45. The method according to claim 44, wherein the sixth information further indicates a fifth time period or a timer; and

the receive beam of the first region and the receive beam of the second region in the first region satisfy the first QCL relationship in the fifth time period; or
the receive beam of the first region and the receive beam of the second region in the first region satisfy the first QCL relationship before the timer expires.

46. A communication apparatus, wherein the communication apparatus comprises a processor, and the processor is configured to run a computer program or instructions, to enable the communication apparatus to perform the method according to any one of claims 1 to 25, or to enable the communication apparatus to perform the method according to any one of claims 26 to 45.

47. A computer-readable storage medium, wherein the computer-readable storage medium stores computer instructions or a program, and when the computer instructions or the program is run on a computer, the method according to any one of claims 1 to 25 is performed, or the method according to any one of claims 26 to 45 is performed.

**48.** A computer program product, wherein the computer program product comprises computer instructions, and when a part or all of the computer instructions are run on a computer, the method according to any one of claims 1 to 25 is performed, or the method according to any one of claims 26 to 45 is performed.

**49.** A chip, comprising:

a memory, configured to store computer program instructions; and
a processor, configured to execute the computer program instructions, so that a communication apparatus comprising the chip performs the method according to any one of claims 1 to 45.

Moment t0    Moment t1    Moment t2

Moment t0    Moment t1    Moment t2

Earth-moving mode

Earth-fixed mode

FIG. 1A

FIG. 1B

EP 4 769 992 A1

FIG. 2A

FIG. 2B

EP 4 769 992 A1

Regular hexagon with
a smallest area

Regular hexagon with
a relatively large area

Regular hexagon
with a largest area

FIG. 3

FIG. 4

Beam sweeping
Transmit the SSB

SSB

Beam sweeping
Receive the SSB

Determine an optimal
wide beam for
receiving a signal, and
reuse the optimal
wide beam when
sending a signal

P1
process

Beam sweeping
Receive the RA
preamble

Msg1
(RA preamble, including an
SSB measurement result)

Determine an
optimal wide
beam for sending
a signal, and
reuse the optimal
wide beam when
receiving a signal

Msg2
(RA response)

RRC setup request

RRC setup

RRC setup complete

RRC
reconfiguration

Beam sweeping
Send the CSI-RS
for BM

CSI-RS for BM

Measurement
report

Measure the CSI-
RS for BM

P2
process

Determine an
optimal narrow
beam for sending
a signal, and reuse
the optimal narrow
beam when
receiving a signal

Beam sweeping
Receive the CSI-
RS for BM

Determine an
optimal narrow
beam for receiving a
signal, and reuse the
optimal narrow
beam when sending
a signal

P3
process

FIG. 5

Base station

Core network

Terminal device

Uu

Satellite

NTN gateway

NG

Data network

EP 4 769 992 A1

FIG. 6

FIG. 7

EP 4 769 992 A1

FIG. 8

Terminal device — Uu — DU — F1 — NTN gateway — CU — NG — Core network — Data network

FIG. 9

EP 4 769 992 A1

Satellite 3

Satellite base station

Satellite 2

Satellite 1

NTN gateway

Core network

Terrestrial base station

FIG. 10

EP 4 769 992 A1

Network
device

⬡ Region ⬭ Beam

x1  x2  x3

Moment T1

FIG. 11A

Network
device

y3  y4
y1
y2

Moment T2

FIG. 11B

First network device

First terminal device

S1201: Obtain first configuration information and/or second configuration information, where the first configuration information indicates information about a first region in which the first network device takes effect, the second configuration information indicates information about a second region in which the first network device takes effect, the first region and the second region are fixed relative to the earth, and a range of the first region is greater than or equal to a range of the second region

S1202: First configuration information and/or second configuration information

S1203: Determine an identifier of a third region based on location information of the first terminal device and the first configuration information, where the third region is the first region in which the first terminal device is located

S1204: Determine an identifier of a fourth region based on the location information of the first terminal device and the second configuration information, where the fourth region is the second region in which the first terminal device is located

S1205: Perform communication based on the identifier of the third region or the identifier of the fourth region

FIG. 12

First network device

First terminal device

S1201: Obtain first configuration information and/or second configuration information, where the first configuration information indicates information about a first region in which the first network device takes effect, the second configuration information indicates information about a second region in which the first network device takes effect, the first region and the second region are fixed relative to the earth, and a range of the first region is greater than or equal to a range of the second region

S1202: First configuration information and/or second configuration information

S1203: Determine an identifier of a third region based on location information of the first terminal device and the first configuration information, where the third region is the first region in which the first terminal device is located

S1204: Determine an identifier of a fourth region based on the location information of the first terminal device and the second configuration information, where the fourth region is the second region in which the first terminal device is located

S1205

S120511: Determine, based on the identifier of the third region, access information corresponding to the third region

S120512: Access the first network device based on the access information corresponding to the third region

FIG. 13

```
┌─────────────────┐                              ┌─────────────────┐
│  First network  │                              │  First terminal │
│     device      │                              │     device      │
└─────────────────┘                              └─────────────────┘
```

S1201: Obtain first configuration information and/or second configuration information, where the first configuration information indicates information about a first region in which the first network device takes effect, the second configuration information indicates information about a second region in which the first network device takes effect, the first region and the second region are fixed relative to the earth, and a range of the first region is greater than or equal to a range of the second region

S1202: First configuration information and/or second configuration information

S1203: Determine an identifier of a third region based on location information of the first terminal device and the first configuration information, where the third region is the first region in which the first terminal device is located

S1204: Determine an identifier of a fourth region based on the location information of the first terminal device and the second configuration information, where the fourth region is the second region in which the first terminal device is located

S120521: First information, indicating the identifier of the fourth region

FIG. 14

First network
device

First terminal
device

S1201: Obtain first configuration information and/or second
configuration information, where the first configuration information
indicates information about a first region in which the first network
device takes effect, the second configuration information indicates
information about a second region in which the first network device
takes effect, the first region and the second region are fixed relative to
the earth, and a range of the first region is greater than or equal to a
range of the second region

S1202: First configuration
information and/or second
configuration information

S1203: Determine an identifier of a third
region based on location information of the
first terminal device and the first
configuration information, where the third
region is the first region in which the first
terminal device is located

S1204: Determine an identifier of a fourth
region based on the location information of
the first terminal device and the second
configuration information, where the fourth
region is the second region in which the first
terminal device is located

S120531: Determine, based on the identifier
of the fourth region, a communication
resource corresponding to the fourth region

S1205

S120532: Send first information by
using the communication resource
corresponding to the fourth region

FIG. 15

```
┌──────────────┐                              ┌──────────────┐
│ First network│                              │ First terminal│
│    device    │                              │    device    │
└──────┬───────┘                              └──────┬───────┘
```

S1201: Obtain first configuration information and/or second configuration information, where the first configuration information indicates information about a first region in which the first network device takes effect, the second configuration information indicates information about a second region in which the first network device takes effect, the first region and the second region are fixed relative to the earth, and a range of the first region is greater than or equal to a range of the second region

S1202: First configuration information and/or second configuration information

S1203: Determine an identifier of a third region based on location information of the first terminal device and the first configuration information, where the third region is the first region in which the first terminal device is located

S1204: Determine an identifier of a fourth region based on the location information of the first terminal device and the second configuration information, where the fourth region is the second region in which the first terminal device is located

S120521: First information, indicating the identifier of the fourth region

S1206: Second information, indicating at least one of the following: access information of a fifth region, an identifier of the fifth region, a total quantity of sixth regions, a radius of the sixth region, or measurement timing configuration, and the fifth region is the sixth region in which the first terminal device is located

S1207: Access a second network device based on the access information of the fifth region

FIG. 16

EP 4 769 992 A1

FIG. 17

First region

Second region

FIG. 18

FIG. 19

Communication apparatus 2000

Processor 2001

Instructions

Memory 2003

Instructions

Transceiver 2002

Radio frequency circuit

Antenna

FIG. 20

2100

Processor 2101

CPU 0

CPU 1

Memory 2103

2102

Communication interface 2104

Output device 2105

Input device 2106

FIG. 21

## INTERNATIONAL SEARCH REPORT

| International application No. |
|---|
| **PCT/CN2023/122912** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L H04W H04B

Documentation searched other than minimum documentation to the extent that such documents are included in the fields searched

Electronic data base consulted during the international search (name of data base and, where practicable, search terms used)

CNTXT, ENTXT, DWPI, CNKI: 标识, 层, 级, 网, 格, 大, 小, 分割, 划分, 区域, 卫星, 配置, 位置, 接入, 非陆地, NTN, ID, level, grid, divi+, part+, satellite, location, position, access

### C. DOCUMENTS CONSIDERED TO BE RELEVANT

| Category* | Citation of document, with indication, where appropriate, of the relevant passages | Relevant to claim No. |
|---|---|---|
| Y | CN 111327354 A (HUAWEI TECHNOLOGIES CO., LTD.) 23 June 2020 (2020-06-23) description, paragraphs 125 and 151-189 | 1-3, 10-23, 26-28, 35-43, 46-49 |
| Y | CN 115665667 A (PENG CHENG LABORATORY et al.) 31 January 2023 (2023-01-31) description, paragraphs 169-175 | 1-3, 10-23, 26-28, 35-43, 46-49 |
| A | CN 116303846 A (THE 28TH RESEARCH INSTITUTE OF CHINA ELECTRONICS TECHNOLOGY GROUP CORP.) 23 June 2023 (2023-06-23) entire document | 1-49 |
| A | WO 2021056582 A1 (HUAWEI TECHNOLOGIES CO., LTD.) 01 April 2021 (2021-04-01) entire document | 1-49 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2024** | **19 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" rowspan="2">INTERNATIONAL SEARCH REPORT<br>Information on patent family members</td><td colspan="2">International application No.<br><br>**PCT/CN2023/122912**</td></tr>
</table>

| Patent document cited in search report | | | Publication date (day/month/year) | Patent family member(s) | | | Publication date (day/month/year) |
|---|---|---|---|---|---|---|---|
| CN | 111327354 | A | 23 June 2020 | WO | 2020119494 | A1 | 18 June 2020 |
| | | | | US | 2021306069 | A1 | 30 September 2021 |
| | | | | EP | 3886337 | A1 | 29 September 2021 |
| CN | 115665667 | A | 31 January 2023 | | None | | |
| CN | 116303846 | A | 23 June 2023 | | None | | |
| WO | 2021056582 | A1 | 01 April 2021 | EP | 4024903 | A1 | 06 July 2022 |
| | | | | US | 2022217561 | A1 | 07 July 2022 |
| | | | | CN | 114424590 | A | 29 April 2022 |

Form PCT/ISA/210 (patent family annex) (July 2022)